(19) Europäisches Patentamt
European Patent Office
Office européen des brevets

(11) **EP 2 887 524 B1**

(12) **EUROPEAN PATENT SPECIFICATION**

(45) Date of publication and mention
of the grant of the patent:
**11.08.2021  Bulletin 2021/32**

(51) Int Cl.:
*H02M 5/293* (2006.01)     *H02M 7/483* (2007.01)
*H02M 5/297* (2006.01)

(21) Application number: **12883406.6**

(22) Date of filing: **20.08.2012**

(86) International application number:
**PCT/JP2012/071005**

(87) International publication number:
**WO 2014/030202 (27.02.2014 Gazette 2014/09)**

(54) **POWER CONVERTER**

STROMWANDLER

CONVERTISSEUR DE COURANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2015  Bulletin 2015/26**

(73) Proprietors:
• **Toshiba Mitsubishi-Electric Industrial Systems Corporation Tokyo 1040031 (JP)**
• **Tokyo Institute of Technology Tokyo 152-8500 (JP)**

(72) Inventors:
• **AKAGI, Hirofumi Meguro-ku, Tokyo 152-8550 (JP)**
• **KAWAMURA, Wataru Meguro-ku, Tokyo 152-8550 (JP)**

(74) Representative: **AWA Sweden AB P.O. Box 11394 404 28 Göteborg (SE)**

(56) References cited:
EP-A1- 2 485 384          WO-A1-2009/139077
WO-A1-2009/144987     WO-A1-2010/145708
WO-A1-2011/129223     WO-A1-2012/099176
JP-A- 2011 182 517

• FELIX KAMMERER ET AL: "A novel cascaded vector control scheme for the Modular Multilevel Matrix Converter", IECON 2011 - 37TH ANNUAL CONFERENCE ON IEEE INDUSTRIAL ELECTRONICS SOCIETY, IEEE, 7 November 2011 (2011-11-07), pages 1097-1102, XP032104636, DOI: 10.1109/IECON.2011.6119461 ISBN: 978-1-61284-969-0
• BETZ R E ET AL: "Using a cascaded H-bridge STATCOM for rebalancing unbalanced voltages", POWER ELECTRONICS, 2007. ICPE '07. 7TH INTERNATONAL CONFERENCE ON, IEEE, PISCATAWAY, NJ, USA, 22 October 2007 (2007-10-22), pages 1219-1224, XP031367246, ISBN: 978-1-4244-1871-8
• SUMMERS T J ET AL: "Phase leg voltage balancing of a cascaded H-Bridge converter based STATCOM using zero sequence injection", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541333, ISBN: 978-1-4244-4432-8
• S.ANGKITIRAKUL: 'Capacitor Voltage Balancing Control for a Modular Matrix Converter' IEEE GIJIROKU, IEEE OYO POWER ELECTRONICS SENMONKA KAIGI 2006, XP010910170

EP 2 887 524 B1

- A. J KORN ET AL: "Direct modular multi-level converter for gearless low-speed drives", 2011 14TH EUROPEAN CONFERENCE ON POWER ELECTRONICS AND APPLICATIONS (EPE 2011) : BIRMINGHAM, UNITED KINGDOM, 30 AUGUST - 1 SEPTEMBER 2011, 1 September 2011 (2011-09-01), pages 1-7, XP055254951, Piscataway, NJ ISBN: 978-1-61284-167-0
- ANGKITITRAKUL S ET AL: "Capacitor Voltage Balancing Control for a Modular Matrix Converter", APPLIED POWER ELECTRONICS CONFERENCE AND EXPOSITION, 2006. APEC '06. T WENTY-FIRST ANNUAL IEEE MARCH 19, 2006, PISCATAWAY, NJ, USA,IEEE, PISCATAWAY, NJ, USA, 19 March 2006 (2006-03-19), pages 1659-1665, XP010910170, DOI: 10.1109/APEC.2006.1620764 ISBN: 978-0-7803-9547-3

**Description**

Technical Field

The present invention relates to a three-phase power converter and in particular, to a modular multilevel cascade converter based on triple-star bridge-cells including clusters where the output sides of a plurality of single-phase full-bridge converters are cascaded, in which each three of the clusters are provided for one corresponding phase on a three-phase AC input side and each three of the clusters connected to respective phases different from each other on the three-phase AC input side are provided for the same phase on a three-phase AC output side.

Background Art

A Modular Multilevel Cascade Converter (MMCC) as a next-generation transformer-less power converter that is easily mounted and suitable for large-capacity/high-voltage use is available. The modular multilevel cascade converter is expected to be applied to motor drive devices used for high-voltage induction motors and high-voltage synchronous motors, and system interconnection power converters.

As a circuit configuration of such a modular multilevel cascade converter, a Triple-Star Bridge-Cells (TSBC) system is being investigated (see, for example, NPLs 1 and 4). This circuit configuration is also referred to as a modular matrix converter. In a Modular Multilevel Cascade Converter based on Triple-Star Bridge-Cells (MMCC-TSBC), three-phase alternate currents are connected to both the input side and the output side and then bidirectional direct conversion can be realized between these three-phase alternate currents, and therefore, no rectifier is needed for the input side and also input/output currents are controllable as sine waves.

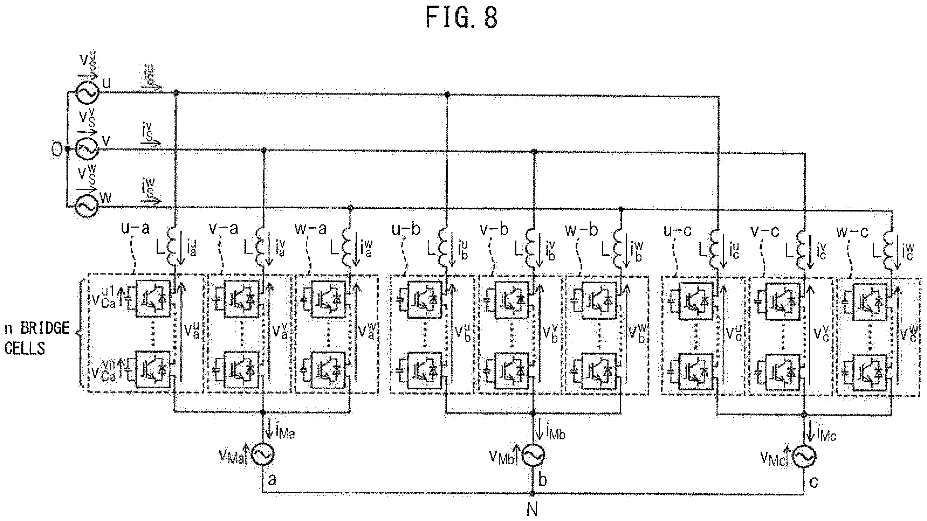

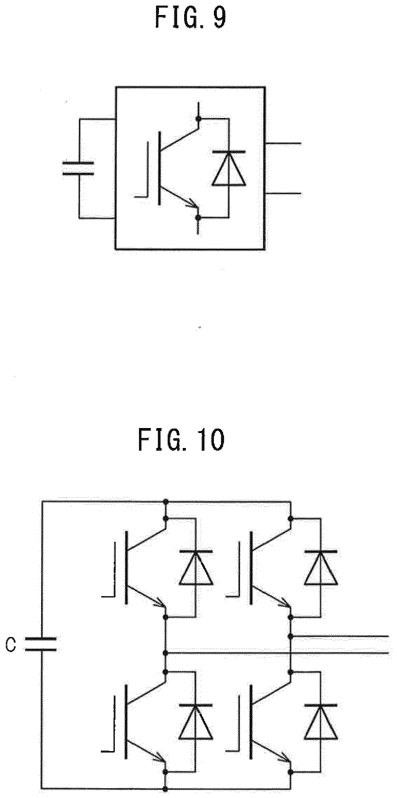

FIG. 8 is a circuit diagram illustrating a main circuit configuration of a common Modular Multilevel Cascade Converter based on Triple-Star Bridge-Cells (MMCC-TSBC). Further, FIGS. 9 and 10 are circuit diagrams illustrating a cell in the modular multilevel cascade converter illustrated in FIG. 8. Hereinafter, those assigned with the same reference sign in different drawings are constituent elements having the same function.

In FIG. 8, the respective phases of the three-phase AC input side are designated as u, v, and w phases, and the respective phases of the three-phase AC output side are designated as a, b, and c phases. However, since a Modular Multilevel Cascade Converter based on Triple-Star Bridge-Cells (MMCC-TSBC) 100 can perform direct bidirectional conversion between three-phase alternate currents and further a circuit configuration thereof is symmetrical as described later, the "three-phase AC input side" and the "three-phase AC output side" in the description here are defined merely for convenience and therefore, for example, the uvw phase and the abc phase may be defined as the "three-phase AC input side" and the "three-phase AC output side", respectively.

In FIG. 8, voltages of voltage supplies connected to the three-phase AC input side of the modular multilevel cascade converter 100 are designated as $v_{Su}$, $v_{Sv}$, and $v_{Sw}$ and a neutral point is designated as O. Further, voltages of voltage supplies connected to the three-phase AC output side of the modular multilevel cascade converter 100 are designated as $v_{Ma}$, $v_{Mb}$, and $v_{Mc}$ and a neutral point is designated as N. When the modular multilevel cascade converter 100 is used in a motor drive device for a high-voltage three-phase induction motor, the voltage supplies of the three-phase AC input side of the modular multilevel cascade converter 100 correspond to a commercially available three-phase AC power supply and the voltage supplies of the three-phase AC output side thereof correspond to a three-phase motor. Further, when the modular multilevel cascade converter 100 is used in a system interconnection power converter, the voltage supplies of the three-phase AC input side of the modular multilevel cascade converter 100 correspond to one three-phase AC system and the voltage supplies of the three-phase AC output side thereof correspond to the other three-phase AC system.

The modular multilevel cascade converter based on triple-star bridge-cells 100 includes a single-phase full-bridge converter as illustrated in FIG. 10 as a module unit. Hereinafter, this single-phase full-bridge converter is referred to as a "bridge cell". The bridge cell includes a DC capacitor C and two semiconductor switch groups connected in parallel to the DC capacitor C. Each semiconductor switch group includes two semiconductor switches connected in series. Connection points of the two semiconductor switches connected in series serve as output terminals of the bridge cell. The semiconductor switch includes a semiconductor switching element causing current to flow in one direction when switched on, and a feedback diode connected in antiparallel to the semiconductor switching element. In order to easily view FIG. 8, FIG. 8 simply expresses the bridge cell illustrated in FIG. 10 as illustrated in FIG. 9.

A unit configured by cascade (serial) connection of the output sides of the bridge cells is referred to as a "cluster". The bridge cells include respective DC capacitors on individual DC sides thereof, and these DC capacitors have independent structures in the respective bridge cells. The number of bridge cells in one cluster is designated as n (wherein, n represents a positive integer).

The modular multilevel cascade converter based on triple-star bridge-cells 100 includes nine clusters that are each connected to the interphase of input side three-phase alternate current and output side three-phase alternate current together with a corresponding reactor L. Specifically, three clusters are provided for each phase on the three-phase AC input side via respective reactors. Further, on the three-phase AC output side, three clusters connected to respective phases different from each other on the three-phase AC input side are provided for the same phase. The modular multilevel cascade converter based on triple-star bridge-cells 100 includes AC input terminals where each three of the input terminals are provided for one corresponding phase on the three-phase AC input side and AC output terminals where each one of the output terminals is provided for one corresponding phase on the three-phase AC output side. Each of the AC input terminals is connected with the reactor L. The clusters connected via the respective reactors to the AC input terminals provided for the different phases are provided so as to be connected to the same AC output terminal.

For example, clusters u-a, v-a, and w-a each connected with the corresponding reactor L are provided between three-phase AC input terminals provided for the u phase, the v phase, and the w phase of the three-phase AC input side, respectively, and a three-phase AC output terminal provided for the a phase of the three-phase AC output side. In other words, the clusters u-a, v-a, and w-a connected via the corresponding reactor L to the u phase, the v phase, and the w phase of the three-phase AC input side, respectively, are connected to the a phase on the three-phase AC output side.

In the same manner, clusters u-b, v-b, and w-b each connected with the corresponding reactor L are provided between three-phase AC input terminals provided for the u phase, the v phase, and the w phase of the three-phase AC input side, respectively, and a three-phase AC output terminal provided for the b phase of the three-phase AC output side. In other words, the clusters u-b, v-b, and w-b connected via the corresponding reactor L to the u phase, the v phase, and the w phase of the three-phase AC input side, respectively, are connected to the b phase on the three-phase AC output side.

In the same manner, clusters u-c, v-c, and w-c each connected with the corresponding reactor L are provided between three-phase AC input terminals provided for the u phase, the v phase, and the w phase of the three-phase AC input side, respectively, and a three-phase AC output terminal provided for the c phase of the three-phase AC output side. In other words, the clusters u-c, v-c, and w-c connected via the reactors L to the u phase, the v phase, and the w phase of the three-phase AC input side, respectively, are connected to the c phase on the three-phase AC output side.

When viewed from the three-phase AC input side or the three-phase AC output side, a group of three clusters provided for the same phase is referred to as a "star converter". When viewed from the three-phase AC output side, for example, the clusters u-a, v-a, and w-a provided for the a phase configure a star converter a; the clusters u-b, v-b, and w-b provided for the b phase configure a star converter b; and the clusters u-c, v-c, and w-c provided for the c phase configure a star converter c. Further, when viewed from the three-phase AC input side, the clusters u-a, u-b, and u-c provided for the u phase configure a star converter u; the clusters v-a, v-b, and v-c provided for the v phase configure a star converter v; and the clusters w-a, w-b, and w-c provided for the w phase configure a star converter w.

In this manner, the modular multilevel cascade converter based on triple-star bridge-cells 100 includes a circuit configuration having a cluster connection relationship in a symmetrical manner when viewed from the three-phase AC input side and the three-phase AC output side. In view of this symmetry, in FIG. 8, the current and voltage in each unit are defined as follows.

As a method for controlling such a modular multilevel cascade converter based on triple-star bridge-cells, there is known a method, in which a voltage-current equation of one star converter is subjected to coordinate transformation to control input/output currents and a voltage balance of DC capacitors (see, for example, NPL 2).

Further, there has been proposed a method, in which when such a modular multilevel cascade converter based on triple-star bridge-cells is used in a drive device of a motor, an AC voltage fluctuation of a DC capacitor generated during low-speed operation of the motor is inhibited (see, for example, NPL 3).

WO 2012/099176 A1 discloses a modular multilevel cascade type power converter based on single delta bridge cells.

Citation List

Non-Patent Literature

NPL 1: S. Angkititrakul and R. W. Erickson, "Capacitor voltage balancing control for a modular matrix converter", (U.S.A.), IEEE. Rec, IEEE-APEC, 2006
NPL 2: F. Kammerer and M. Braun, "A novel cascaded vector control scheme for the modular multilevel matrix converter", (U.S.A.), IEEE. Rec, IEEE-IECON, pp1097 - 1102, 2011
NPL 3: A. J. Korn, M. Winkelnkemper, and J. W. Kolar, "Direct Modular Multi-Level Converter for Gearless Low-Speed Drives", (U.S.A.), IEEE. Rec, IEEE-EPE, 2011
NPL 4: Wataru Kawamura, Makoto Hagiwara, and Hirofumi Akagi, "Classification and Terminology of the Modular Multilevel Cascade Converter (MMCC-TSBC)", IEEJ Annual Meeting, No. 4-052, March 2012

Summary of Invention

Technical Problem

In a Modular Multilevel Cascade Converter based on Triple-Star Bridge-Cells (MMCC-TSBC), since a DC capacitor of each bridge cell operates as a floating type, it is necessary to perform control for stably holding a voltage of the DC capacitor in the each bridge cell.

Generally, in a modular multilevel cascade converter, when the three-phase AC output side is low in frequency, a pulsation width of a voltage of a DC capacitor increases in inverse proportion to frequency, resulting in a problem that it is difficult to continue an operation at low frequency.

Further, according to the method described in NPL 2, voltages of DC capacitors in bridge cells are individually controlled for the respective phases independently, i.e., for each star converter, and therefore, when DC capacitor control has been realized for the star converters of all the three phases, the current control systems of the respective phases interfere with each other, resulting in the difficulty in realization of a three-phase equilibrium. Further, control is performed using a zero-phase voltage of a converter and therefore, when a PWM modulation system is used for switching signal generation, it may be difficult to perform control at a modulation rate of about 1.

Further, according to the method described in NPL 3, when motor frequency approaches one-third of a power supply frequency, a problem occurs that a pulsation width of a voltage of a DC capacitor increases. Further, NPL 3 does not describe anything about control where a power factor of 1 is not realized on the three-phase AC output side, resulting in a problem that applicable operation methods are limited.

Accordingly, in view of the aforementioned problems, an object of the present invention is to provide a three-phase power converter including clusters where the output sides of a plurality of single-phase full-bridge converters are cascaded, in which each three of the clusters are provided for one corresponding phase on a three-phase AC input side and each three of the clusters connected to respective phases different from each other on the three-phase AC input side are provided for the same phase on a three-phase AC output side, wherein a DC capacitor can be stably controlled without interfering with control of input/output currents.

Solution to Problem

A power converter for three-phase AC, including AC input terminals where each three of the input terminals are provided for one corresponding phase on a three-phase AC input side, reactors connected to the respective AC input, terminals, AC output terminals where each one of the output terminals is provided for one corresponding phase on a three-phase AC output side, and clusters where single-phase full-bridge converters individually including a DC capacitor on an input side are cascaded on an output side so that the clusters connected to the AC input terminals disposed for respective phases different from each other via the reactors are connected to the same AC output terminal, includes a circulating current controller controlling circulating current circulating in the power converter to follow a predetermined circulating current command value; an AC input/output current controller controlling current on the three-phase AC input side to follow an AC input current command value and controlling current on the three-phase AC output side to follow an AC output current command value; and an effective power controller controlling effective power flowing in the power converter from the three-phase AC input side so that a whole DC capacitor voltage average value obtained by averaging voltages of all the DC capacitors in the power converter follows a predetermined DC capacitor voltage command value.

The power converter includes a DC capacitor voltage balancing controller controlling circulating current circulating in the power converter so that each of inner-cluster DC capacitor voltage average values obtained by averaging voltage values of the DC capacitors of the respective clusters follows the whole DC capacitor voltage average value.

The DC capacitor voltage balancing controller may include an inter-star converter balancing controller inhibiting a deviation in inner-cluster DC capacitor voltage average values generated among star converters each including three clusters connected to the same phase, by power transfer among the star converters via control of a positive phase component of circulating current; and an inner-star converter balancing controller inhibiting a deviation in inner-cluster DC capacitor voltage average values generated among the clusters by power transfer among the clusters in the respective star converters via control of a reverse phase component of the circulating current.

Further, the power converter may further include a DC capacitor voltage fluctuation inhibiting controller controlling circulating current so as to cancel a frequency component being twice a frequency of current of the three-phase AC output side by temporally changing instantaneous effective power flowing in the star converter from the three-phase AC input side in harmony with instantaneous effective power flowing out to the three-phase AC output side from the star converter.

Further, the power converter may further include an individual balancing controller controlling each of voltages of DC capacitors of bridge cells to follow an inner-cluster DC capacitor voltage average value with respect to a cluster including the DC capacitors of the bridge cells.

Advantageous Effects of Invention

In a Modular Multilevel Cascade Converter based on Triple-Star Bridge-Cells (MMCC-TSBC) including clusters where the output sides of a plurality of single-phase full-bridge converters are cascaded, in which each three of the clusters are provided for one corresponding phase on a three-phase AC input side and each three of the clusters connected to respective phases different from each other on the three-phase AC input side are provided for the same phase on a three-phase AC output side, when DC capacitors of bridge cells in the nine clusters are collectively controlled by controlling circulating current circulating in the power converter, an imbalance of voltages of the DC capacitors in the respective bridge cells generated among the clusters can be removed without interfering with control of input/output currents. Further, since no zero-phase voltage of the converter is used for control, overmodulation tends not to occur either in an operation at a modulation rate of about 1.

Further, when a DC capacitor voltage fluctuation inhibiting controller is provided in a circulating current controller and the power converter is operated by appropriately switching inhibition control modes according to a frequency of current of the three-phase AC output side, it is possible to inhibit a pulsation of a voltage of a DC capacitor regardless of a frequency on the three-phase AC output side and to stably control the DC capacitor. Further, the control by the DC capacitor voltage fluctuation inhibiting controller is realized by controlling circulating current circulating in the power converter and therefore, DC capacitor voltage fluctuation inhibiting control can be realized without interfering with control of input/output currents.

Brief Description of Drawings

FIG. 1 is a circuit diagram illustrating a power converter.
FIG. 2 is a chart illustrating operations of a DC capacitor voltage fluctuation inhibiting controller.
FIG. 3 is a block diagram illustrating a control apparatus of a power converter according to the present invention.
FIG. 4 is a diagram illustrating a main circuit configuration used for a simulation.
FIG. 5 is a chart illustrating a simulation result verifying an operation of an inter-star converter balancing controller.
FIG. 6 is a chart illustrating a simulation result verifying an operation of an inhibition control I mode of DC capacitor voltage fluctuation inhibiting control.
FIG. 7 is a chart illustrating a simulation result verifying an operation of an inhibition control II mode of DC capacitor voltage fluctuation inhibiting control.
FIG. 8 is a circuit diagram illustrating a main circuit configuration of a common Modular Multilevel Cascade Converter based on Triple-Star Bridge-Cells (MMCC-TSBC).
FIG. 9 is a circuit diagram (No. 1) illustrating a cell in the modular multilevel cascade converter illustrated in FIG. 8.
FIG. 10 is a circuit diagram (No. 2) illustrating a cell in the modular multilevel cascade converter illustrated in FIG. 8.

Description of Embodiments

With reference to the drawings, a Modular Multilevel Cascade Converter based on Triple-Star Bridge-Cells (MMCC-TSBC) will now be described. However, it should be understood that the present invention is not limited to the drawings or embodiments to be described below.

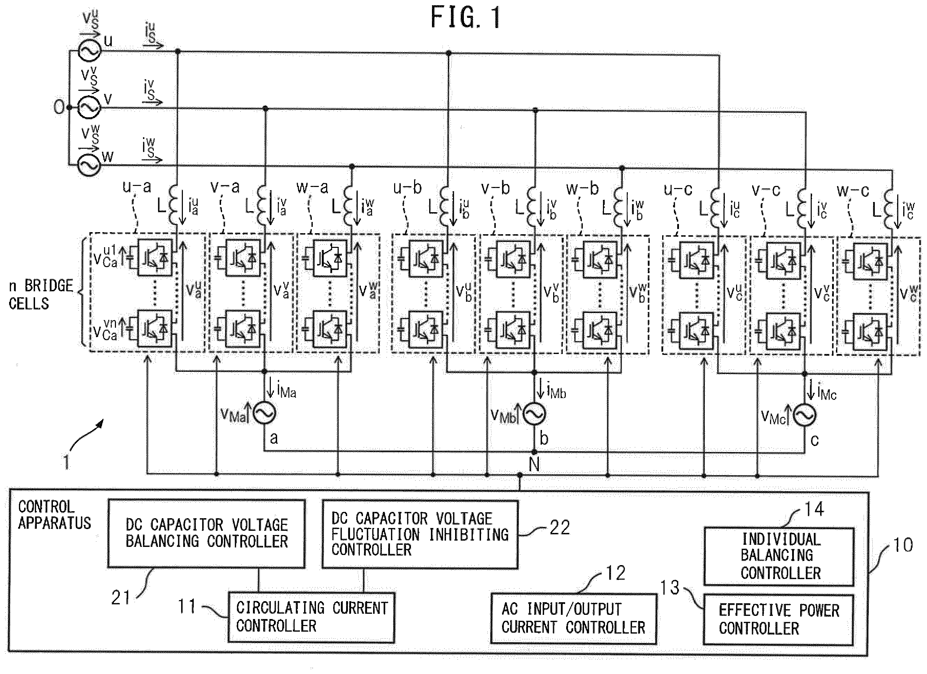

FIG. 1 is a circuit diagram illustrating a power converter according to the present invention. In order to easily view FIG. 1, in FIG. 1, the bridge cell illustrated in FIG. 10 is simply expressed as that illustrated in FIG. 9. In FIG. 1, the respective phases on the three-phase AC input side are designated as u, v, and w phases and the respective phases on the three-phase AC output side are designated as a, b, and c phases. However, the Modular Multilevel Cascade Converter based on Triple-Star Bridge-Cells (MMCC-TSBC) (hereinafter, referred to simply as the "power converter") can realize direct bidirectional conversion between three-phase alternate currents and further, as described above, its circuit configuration is symmetrical and therefore, the "three-phase AC input side" and the "three-phase AC output side" in the description here are defined merely for convenience and therefore, the abc phase and the uvw phase may be defined as the "three-phase AC input side" and the "three-phase AC output side", respectively.

In FIG. 1, the voltages of voltage supplies connected to the three-phase AC input side of a power converter 1 are designated as $v_{Su}$, $v_{Sv}$, and $v_{Sw}$ and a neutral point is designated as O. Further, the voltages of voltage supplies connected to the three-phase AC output side of the power converter 1 are designated as $v_{Ma}$, $v_{Mb}$, and $v_{Mc}$ and a neutral point is designated as N. When the power converter 1 is used in a motor drive device for a high-voltage induction motor, the voltage supplies of the three-phase AC input side of the power converter 1 correspond to a commercially available three-phase AC power supply and the voltage supplies of the three-phase AC output side thereof correspond to a three-phase motor. Further, when the power converter 1 is used in a system interconnection power converter, the voltage supplies of the three-phase AC input side of the power converter 1 correspond to one three-phase AC system and the voltage supplies of the three-phase AC output side thereof correspond to the other three-phase AC system.

The power converter 1 includes a single-phase full-bridge converter (bridge cell) as illustrated in FIG. 10 as a module unit. The bridge cell includes a DC capacitor C and two semiconductor switch groups connected in parallel to the DC capacitor C. Each semiconductor switch group includes two semiconductor switches connected in series. Connection points of the two semiconductor switches connected in series serve as output terminals of the bridge cell. The semiconductor switch includes a semiconductor switching element causing current to flow in one direction when switched on and a feedback diode connected in antiparallel to the semiconductor switching element.

The output sides of a plurality of bridge cells are cascade (serially) connected to each other to configure a cluster. The power converter 1 includes nine clusters. The bridge cells include respective DC capacitors on individual DC sides thereof, and these DC capacitors each have an independent structure in the respective bridge cells. The number of bridge cells in one cluster is designated as n (wherein, n represents a positive integer).

The power converter 1 includes AC input terminals where each three of the input terminals are provided for one corresponding phase on the three-phase AC input side and AC output terminals where each one of the output terminals is provided for one corresponding phase on the three-phase AC output side. Further, the AC input terminals are connected with the respective reactors L. The clusters connected via the reactors to the AC input terminals provided for the different phases are provided so as to be connected to the same AC output terminal. In other words, three clusters are provided for each phase via the respective reactors for the three-phase AC input side. Further, on the three-phase AC output side, three clusters connected to respective phases different from each other on the three-phase AC input side are provided for the same phase. More detailed description will be made as follows.

Between three-phase AC input terminals provided for the u phase, the v phase, and the w phase of the three-phase AC input side and a three-phase AC output terminal provided for the a phase of the three-phase AC output side, clusters u-a, v-a, and w-a each connected with the corresponding reactor L are provided, respectively. In other words, the clusters u-a, v-a, and w-a each connected via the corresponding reactor L to the u phase, the v phase, and the w phase of the three-phase AC input side, respectively, are connected to the a phase on the three-phase AC output side.

In the same manner, between the three-phase AC input terminals provided for the u phase, the v phase, and the w phase of the three-phase AC input side and a three-phase AC output terminal provided for the b phase of the three-phase AC output side, clusters u-b, v-b, and w-b each connected with the corresponding reactor L are provided, respectively. In other words, the clusters u-b, v-b, and w-b each connected via the corresponding reactor L to the u phase, the v phase, and the w phase of the three-phase AC input side, respectively, are connected to the b phase on the three-phase AC output side.

In the same manner, between the three-phase AC input terminals provided for the u phase, the v phase, and the w phase of the three-phase AC input side and a three-phase AC output terminal provided for the c phase of the three-phase AC output side, clusters u-c, v-c, and w-c each connected with the corresponding reactor L are provided, respectively. In other words, the clusters u-c, v-c, and w-c each connected via the corresponding reactor L to the u phase, the v phase, and the w phase of the three-phase AC input side, respectively, are connected to the c phase on the three-phase AC output side.

When viewed from the three-phase AC input side or the three-phase AC output side, the three clusters provided for the same phase configure a star converter. When viewed from the three-phase AC output side, for example, the clusters u-a, v-a, and w-a provided for the a phase configure a star converter a; the clusters u-b, v-b, and w-b provided for the b phase configure a star converter b; and the clusters u-c, v-c, and w-c provided for the c phase configure a star converter c. Further, when viewed from the three-phase AC input side, the clusters u-a, u-b, and u-c provided for the u phase configure a star converter u; the clusters v-a, v-b, and v-c provided for the v phase configure a star converter v; and the clusters w-a, w-b, and w-c provided for the w phase configure a star converter w.

In this manner, when viewed from the three-phase AC input side and from the three-phase AC output side, the power converter 1 has a circuit configuration exhibiting a cluster connection relationship in a symmetrical manner. In view of this symmetry, in FIG. 1, the current and voltage in each unit are defined as follows.

Currents of the respective phases u, v, and w flowing in from the three-phase AC input side of the power converter 1 are designated as $i_s^u$, $i_s^v$, and $i_s^w$, respectively, and currents of the respective phases a, b, and c flowing out to the three-phase AC output side thereof are designated as $i_{Ma}$, $i_{Mb}$, and $i_{Mc}$, respectively. Cluster currents flowing in the clusters u-a, v-a, and w-a are designated as $i_a^u$, $i_a^v$, and $i_a^w$, respectively; cluster currents flowing in the clusters u-b, v-b, and w-b are designated as $i_b^u$, $i_b^v$, and $i_b^w$, respectively; and cluster currents flowing in the clusters u-c, v-c, and w-c are designated as $i_c^u$, $i_c^v$, and $i_c^w$, respectively. Output voltages of the clusters u-a, v-a, and w-a are designated as $v_a^u$, $v_a^v$, and $v_a^w$, respectively; output voltages of the clusters u-b, v-b, and w-b are designated as $v_b^u$, $v_b^v$, and $v_b^w$,

respectively; and output voltages of the clusters u-c, v-c, and w-c are designated as $v_c^u$, $v_c^v$, and $v_c^w$, respectively.

Further, in one cluster, n bridge cells cascaded to each other are provided (wherein, n is a positive integer). A voltage of a DC capacitor in a j-th bridge cell (wherein, j = 1 to n and the same will apply hereinafter) within the cluster u-a is designated as $v_{Ca}^{uj}$; a voltage of a DC capacitor in a j-th bridge cell within the cluster v-a is designated as $v_{Ca}^{vj}$; and a voltage of a DC capacitor in a j-th bridge cell within the cluster w-a is designated as $v_{Ca}^{wj}$. In the same manner, a voltage of a DC capacitor in a j-th bridge cell within the cluster u-b is designated as $v_{Cb}^{uj}$; a voltage of a DC capacitor in a j-th bridge cell within the cluster v-b is designated as $v_{Cb}^{vj}$; and a voltage of a DC capacitor in a j-th bridge cell within the cluster w-b is designated as $v_{Cb}^{wj}$. In the same manner, a voltage of a DC capacitor in a j-th bridge cell within the cluster u-c is designated as $v_{Cc}^{uj}$; a voltage of a DC capacitor in a j-th bridge cell within the cluster v-c is designated as $v_{Cc}^{vj}$; and a voltage of a DC capacitor in a j-th bridge cell within the cluster w-c is designated as $v_{Cc}^{wj}$.

In the power converter 1 having the main circuit configuration as described above, a control apparatus 10, including a circulating current controller 11, an AC input/output current controller 12, an effective power controller 13, an individual balancing controller 14, a DC capacitor voltage balancing controller 21, and a DC capacitor voltage fluctuation inhibiting controller 22, controls a switching operation of a semiconductor switching element in each cluster. The control apparatus 10 including the aforementioned units is implemented using an arithmetic processing unit such as a DSP, an FPGA, and the like.

The circulating current controller 11 controls circulating current circulating in the power converter 1 to follow a predetermined circulating current command value.

A variation in circuit elements configuring the power converter 1 or the like causes an imbalance of the voltages of the DC capacitors among the clusters and among the bridge cells, and to remove this imbalance, the DC capacitor voltage balancing controller 21 controls circulating current circulating in the power converter 1 so that each of inner-cluster DC capacitor voltage average values obtained by averaging voltage values of the DC capacitors for the respective clusters follows a whole DC capacitor voltage average value obtained by averaging voltages of all the DC capacitors in the power converter 1. The DC capacitor voltage balancing controller 21 prepares a circulating current command value for this purpose.

This DC capacitor voltage balancing controller 21 includes an inter-star converter balancing controller and an inner-star converter balancing controller. The inter-star converter balancing controller inhibits a deviation in inner-cluster DC capacitor voltage average values generated among star converters each including three clusters connected to the same phase, by power transfer among the star converters via control of a positive phase component of circulating current. The inner-star converter balancing controller inhibits a deviation in inner-cluster DC capacitor voltage average values generated among the clusters by power transfer among the clusters in the respective star converters via control of a reverse phase component of the circulating current. The inter-star converter balancing controller and the inner-star converter balancing controller will be described in detail later.

The AC input/output current controller 12 controls current on the three-phase AC input side to follow an AC input current command value and current on the three-phase AC output side to follow an AC output current command value. When, for example, for use of the power converter 1 as a drive device for a three-phase motor, the three-phase motor is connected to the three-phase AC output side, it is possible that as an AC output current value, a command value for obtaining a desired motor rotational state is employed or motor current flowing in the three-phase motor is determined from cluster current and used for vector control of the three-phase motor.

The effective power controller 13 controls effective power flowing in the power converter from the three-phase AC input side so that a whole DC capacitor voltage average value obtained by averaging voltages of all the DC capacitors in the power converter 1 follows a predetermined DC capacitor voltage command value. In other words, an internal resistance and the like present in the power converter 1 consume energy accumulated in the DC capacitor in each cluster and then a voltage of the DC capacitor decreases, and therefore, to compensate the consumed energy, the effective power controller 13 performs control for adjusting an amount of effective power input from the three-phase AC input side.

The individual balancing controller 14 controls each of voltages of the DC capacitors of the respective bridge cells to follow an inner-cluster DC capacitor voltage average value with respect to a cluster including the DC capacitors of the bridge cells.

The control apparatus 10 of the power converter 1 may include a DC capacitor voltage fluctuation inhibiting controller 22, in addition to the aforementioned controllers. The DC capacitor voltage fluctuation inhibiting controller 22 controls circulating current so as to cancel a frequency component being twice a frequency of current of the three-phase AC output side by temporally changing instantaneous effective power flowing in the star converter from the three-phase AC input side in harmony with instantaneous effective power flowing out to the three-phase AC output side from the star converter. The DC capacitor voltage fluctuation inhibiting controller 22 prepares a circulating current command value for this purpose. The DC capacitor voltage fluctuation inhibiting controller 22 will be described in detail later.

The circulating current controller 11 controls circulating current circulating in the power converter 1 to follow a circulating current command value prepared by the DC capacitor voltage balancing controller 21 or a circulating current command value obtained by combining a circulating current command value prepared by the DC capacitor voltage balancing controller 21 and a circulating current command value prepared by the DC capacitor voltage fluctuation inhibiting controller 22.

Next, an operational principle of each control system will be described in more detail.

Initially, $\omega_s$ is designated as an angular frequency of three-phase alternate current of the input side of the power converter 1 and transformation matrix $[C^{\alpha\beta O}]$ of $\alpha\beta O$ transformation is defined as equation 1.

[Formula 1]

$$\left[C^{\alpha\beta 0}\right]=\sqrt{\frac{2}{3}}\begin{bmatrix} 1 & -\frac{1}{2} & -\frac{1}{2} \\ 0 & \frac{\sqrt{3}}{2} & -\frac{\sqrt{3}}{2} \\ \frac{1}{\sqrt{2}} & \frac{1}{\sqrt{2}} & \frac{1}{\sqrt{2}} \end{bmatrix} \cdots\cdots (1)$$

Further, transformation matrix $[C^{dq}]$ of dq transformation is defined as equation 2.

[Formula 2]

$$\left[C^{dq}\right]=\begin{bmatrix} \sin\omega_s t & -\cos\omega_s t \\ \cos\omega_s t & \sin\omega_s t \end{bmatrix} \cdots\cdots (2)$$

With respect to the main circuit illustrated in FIG. 1, the voltage equation represented by equation 3 is established. $V_N$ represents a potential of a neutral point N of the three-phase AC output side when viewed from a neutral point O of the three-phase AC input side and corresponds to a zero-phase voltage of the power converter 1.

[Formula 3]

$$\begin{bmatrix} v_S^u & v_S^v & v_S^w \\ v_S^u & v_S^v & v_S^w \\ v_S^u & v_S^v & v_S^w \end{bmatrix} = L\frac{d}{dt}\begin{bmatrix} i_a^u & i_a^v & i_a^w \\ i_b^u & i_b^v & i_b^w \\ i_c^u & i_c^v & i_c^w \end{bmatrix} + \begin{bmatrix} v_a^u & v_a^v & v_a^w \\ v_b^u & v_b^v & v_b^w \\ v_c^u & v_c^v & v_c^w \end{bmatrix} + \begin{bmatrix} v_{Ma} & v_{Ma} & v_{Ma} \\ v_{Mb} & v_{Mb} & v_{Mb} \\ v_{Mc} & v_{Mc} & v_{Mc} \end{bmatrix} + v_N\begin{bmatrix} 1 & 1 & 1 \\ 1 & 1 & 1 \\ 1 & 1 & 1 \end{bmatrix} \cdots\cdots (3)$$

With respect to cluster currents $i_a^u$, $i_a^v$, $i_a^w$, $i_b^u$, $i_b^v$, $i_b^w$, $i_c^u$, $i_c^v$, and $i_c^w$, when abc coordinates and uvw coordinates are transformed to $\alpha\beta O$ coordinates, equation 4 is obtained.

[Formula 4]

$$^t\left[C^{\alpha\beta 0}\right]\begin{bmatrix} i_a^u & i_a^v & i_a^w \\ i_b^u & i_b^v & i_b^w \\ i_c^u & i_c^v & i_c^w \end{bmatrix}\left[C^{\alpha\beta 0}\right]$$

$$=\sqrt{\frac{2}{3}}\begin{bmatrix} 1 & 0 & \frac{1}{\sqrt{2}} \\ -\frac{1}{2} & \frac{\sqrt{3}}{2} & \frac{1}{\sqrt{2}} \\ -\frac{1}{2} & -\frac{\sqrt{3}}{2} & \frac{1}{\sqrt{2}} \end{bmatrix}\begin{bmatrix} i_a^u & i_a^v & i_a^w \\ i_b^u & i_b^v & i_b^w \\ i_c^u & i_c^v & i_c^w \end{bmatrix}\cdot\sqrt{\frac{2}{3}}\begin{bmatrix} 1 & -\frac{1}{2} & -\frac{1}{2} \\ 0 & \frac{\sqrt{3}}{2} & -\frac{\sqrt{3}}{2} \\ \frac{1}{\sqrt{2}} & \frac{1}{\sqrt{2}} & \frac{1}{\sqrt{2}} \end{bmatrix}=\begin{bmatrix} i_\alpha^\alpha & i_\alpha^\beta & i_\alpha^0 \\ i_\beta^\alpha & i_\beta^\beta & i_\beta^0 \\ i_0^\alpha & i_0^\beta & i_0^0 \end{bmatrix} \cdots\cdots (4)$$

When with respect to equation 4, transformation matrix $[C^{\alpha\beta O}]$ represented in equation 1 is multiplied from the left to transform abc coordinates to $\alpha\beta O$ coordinates and then transpose matrix $^t[C^{\alpha\beta O}]$ (generally, expressed also as

"[C$^{\alpha\beta O}$]$^{t}$") of transformation matrix [C($^{\alpha\beta O}$] represented in equation 1 is multiplied from the right to transform uvw coordinates to $\alpha\beta$O coordinates, equation 5 is obtained.
[Formula 5]

$$\sqrt{3}\begin{bmatrix} 0 & 0 & 0 \\ 0 & 0 & 0 \\ v_S^\alpha & v_S^\beta & 0 \end{bmatrix} = L\frac{d}{dt}\begin{bmatrix} i_\alpha^\alpha & i_\alpha^\beta & i_\alpha^0 \\ i_\beta^\alpha & i_\beta^\beta & i_\beta^0 \\ i_0^\alpha & i_0^\beta & 0 \end{bmatrix} + \begin{bmatrix} v_\alpha^\alpha & v_\alpha^\beta & v_\alpha^0 \\ v_\beta^\alpha & v_\beta^\beta & v_\beta^0 \\ v_0^\alpha & v_0^\beta & v_0^0 \end{bmatrix} + \sqrt{3}\begin{bmatrix} 0 & 0 & v_{M\alpha} \\ 0 & 0 & v_{M\beta} \\ 0 & 0 & 0 \end{bmatrix} + \begin{bmatrix} 0 & 0 & 0 \\ 0 & 0 & 0 \\ 0 & 0 & 3v_N \end{bmatrix} \cdots\cdots (5)$$

In equation 5, zero-phase voltages of $v_S$ and $v_M$ are assumed to be zero. Further, since there is no current path passing between the neutral point O of the three-phase AC input side and the neutral point N of the three-phase AC output side, an assumption: $i_o{}^o = 0$ is made.

With respect to cluster current on $\alpha\beta$O coordinates, the relational equations represented in equation 6, equation 7, equation 8, and equation 9 are established from FIG. 1 and the current side of the Kirchhoff formula.
[Formula 6]

$$i_\alpha^0 = \frac{1}{\sqrt{3}}\left(i_\alpha^u + i_\alpha^v + i_\alpha^w\right) = \frac{i_{M\alpha}}{\sqrt{3}} \cdots\cdots (6)$$

[Formula 7]

$$i_0^\alpha = \frac{1}{\sqrt{3}}\left(i_a^\alpha + i_b^\alpha + i_c^\alpha\right) = \frac{i_S^\alpha}{\sqrt{3}} \cdots\cdots (7)$$

[Formula 8]

$$i_\beta^0 = \frac{1}{\sqrt{3}}\left(i_\beta^u + i_\beta^v + i_\beta^w\right) = \frac{i_{M\beta}}{\sqrt{3}} \cdots\cdots (8)$$

[Formula 9]

$$i_0^\beta = \frac{1}{\sqrt{3}}\left(i_a^\beta + i_b^\beta + i_c^\beta\right) = \frac{i_S^\beta}{\sqrt{3}} \cdots\cdots (9)$$

In other words, $i_\alpha{}^0$, $i_\beta{}^0$, $i_0{}^\alpha$, and $i_0{}^\beta$ expressed by equation 4 correspond to currents $i_{M\alpha}$ and $i_{M\beta}$ of the three-phase AC output side and currents $i_S{}^\alpha$ and $i_S{}^\beta$ of the three-phase AC input side, respectively. Therefore, hereinafter, $1_\alpha{}^0$, $i_\beta{}^0$, $i_0{}^\alpha$, and $i_0{}^\beta$ will be expressed by $i_{M\alpha}$, $i_{M\beta}$, $i_S{}^\alpha$, and $i_S{}^\beta$, respectively.

Further, in equation 4, current components $i_{M\alpha}$ and $i_{M\beta}$, and $i_S{}^\alpha$ and $i_S{}^\beta$ correspond to respective currents of the three-phase AC output side and the three-phase AC input side as described above, and therefore, current components $i_\alpha{}^\alpha$, $i_\alpha{}^\beta$, $i_\beta{}^\alpha$, and $i_\beta{}^\beta$ are considered currents circulating only within the power converter 1 without being input and output to and from the three-phase AC output side and the three-phase AC input side.

Therefore, these currents $i_\alpha{}^\alpha$, $i_\alpha{}^\beta$, $i_\beta{}^\alpha$, and $i_\beta{}^\beta$ circulating only in the main circuit wiring within the power converter 1 are defined as "circulating currents". Since the circulating current flows only within the power converter 1, regardless of a value thereof, no effect is produced on currents of the three-phase AC output side and the three-phase AC input side but on the other hand, an effect is produced on charge and discharge of the DC capacitor in the bridge cell as described later.

Therefore, these circulating currents $i_\alpha{}^\alpha$, $i_\alpha{}^\beta$, $i_\beta{}^\alpha$, and $i_\beta{}^\beta$ are used in balancing control of voltages of the DC capacitors among the clusters by the DC capacitor voltage balancing controller 21 and in inhibiting control of a voltage fluctuation of the DC capacitor by the DC capacitor voltage fluctuation inhibiting controller, as described later.

On the basis of equation 5 where the voltage equation of the main circuit wiring illustrated in FIG. 1 is expressed on $\alpha\beta$O coordinates, the control apparatus 10 prepares voltage command values $v_a{}^{u*}$, $v_a{}^{v*}$, $v_a{}^{w*}$, $v_b{}^{u*}$, $v_b{}^{v*}$, $v_b{}^{w*}$, $v_c{}^{u*}$, $v_c{}^{v*}$, and $v_c{}^{w*}$ for controlling respective output voltages of the clusters u-a, v-a, w-a, u-b, v-b, w-b, u-c, v-c, and w-c, respectively. The generated voltage command values are appropriately normalized and thereafter used as switching command values. These switching command values are compared with triangle wave carrier signals (maximum value: 1, minimum value: -1) of a carrier frequency using a switching controller (not illustrated) in the control apparatus 10 and then PWM switching signals are finally generated. The generated PWM switching signals are used for switching control of semiconductor switching elements in the bridge cells in a corresponding cluster. The voltage command values $v_a^{u*}$, $v_a^{v*}$, $v_a^{w*}$, $v_b^{u*}$, $v_b^{v*}$, $v_b^{w*}$, $v_c^{u*}$, $v_c^{v*}$, and $v_c^{w*}$ are output command values as a cluster, and actually, as described above, n bridge cells are cascaded in one cluster. Therefore, the voltage command values each are divided into n equal parts, for example, and then a switching command value for each bridge cell is generated and used.

Next, preparation of a voltage command value using the control apparatus 10 based on equation 5 will be described.

In equation 5, $v_O^O$ does not affect cluster current and affects only a voltage $v_N$ in the neutral point N of the three-phase AC output side. In the present invention, since no zero-phase voltage of the power converter is used, an assumption: a voltage command value $v_O^{O*} = 0$ is made.

With respect to the three-phase AC input side of the power converter 1, from a voltage of the voltage supply of the three-phase AC input side and a relationship between current of the three-phase AC input side flowing in the reactor L and a potential of the three-phase AC input side of a cluster, equation 10 is established.

[Formula 10]

$$\sqrt{3}\begin{bmatrix} v_s^\alpha \\ v_s^\beta \end{bmatrix} = \frac{1}{\sqrt{3}}L\frac{d}{dt}\begin{bmatrix} i_s^\alpha \\ i_s^\beta \end{bmatrix} + \begin{bmatrix} v_0^\alpha \\ v_0^\beta \end{bmatrix} \cdots\cdots (10)$$

When both sides of equation 10 is multiplied by transformation matrix $[C^{dq}]$ of dq transformation from the left, equation 11 is obtained.

[Formula 11]

$$\sqrt{3}\begin{bmatrix} v_s^d \\ v_s^q \end{bmatrix} = \frac{1}{\sqrt{3}}\begin{bmatrix} L\frac{d}{dt} & -\omega_s L \\ \omega_s L & L\frac{d}{dt} \end{bmatrix}\begin{bmatrix} i_s^d \\ i_s^q \end{bmatrix} + \begin{bmatrix} v_0^d \\ v_0^q \end{bmatrix} \cdots\cdots (11)$$

Therefore, the AC input/output current controller 12 in the control apparatus 10 controls current of the three-phase AC input side to follow AC input current command values $i_s^{d*}$ and $i_s^{q*}$ as represented in equation 12.

[Formula 12]

$$\begin{bmatrix} v_0^{d*} \\ v_0^{q*} \end{bmatrix} = \sqrt{3}\begin{bmatrix} v_s^d \\ v_s^q \end{bmatrix} - \frac{\omega_s L}{\sqrt{3}}\begin{bmatrix} 0 & -1 \\ 1 & 0 \end{bmatrix}\begin{bmatrix} i_s^d \\ i_s^q \end{bmatrix} - K_s\left(1 + \frac{1}{sT_s}\right)\left(\begin{bmatrix} i_s^{d*} \\ i_s^{q*} \end{bmatrix} - \begin{bmatrix} i_s^d \\ i_s^q \end{bmatrix}\right) \cdots\cdots (12)$$

In equation 12, $K_s$ and $T_s$ represent a proportional control gain of current control and a time constant of integral control on the three-phase AC input side, respectively. The aforementioned current control of the three-phase AC input side is performed so as to provide voltage command values $v_O^{d*}$ and $v_O^{q*}$ constituting a part of the output voltage command value of the cluster.

Further, circulating current flows only within the power converter 1 and therefore, when with respect to equation 5, only the portion of the current components $i_\alpha^\alpha$, $i_\alpha^\beta$, $i_\beta^\alpha$, and $i_\beta^\beta$ is expressed, equation 13 is established.

[Formula 13]

$$\begin{bmatrix} 0 & 0 \\ 0 & 0 \end{bmatrix} = L\frac{d}{dt}\begin{bmatrix} i_\alpha^\alpha & i_\alpha^\beta \\ i_\beta^\alpha & i_\beta^\beta \end{bmatrix} + \begin{bmatrix} v_\alpha^\alpha & v_\alpha^\beta \\ v_\beta^\alpha & v_\beta^\beta \end{bmatrix} \cdots\cdots (13)$$

Therefore, the circulating current controller 11 in the control apparatus 10 controls circulating currents $i_\alpha^\alpha$, $i_\alpha^\beta$, $i_\beta^\alpha$, and $i_\beta^\beta$ to follow circulating current command values $i_\alpha^{\alpha*}$, $i_\alpha^{\beta*}$, $i_\beta^{\alpha*}$, and $i_\beta^{\beta*}$ as represented in equation 14, respectively.

[Formula 14]

$$\begin{bmatrix} v_\alpha^{\alpha*} & v_\alpha^{\beta*} \\ v_\beta^{\alpha*} & v_\beta^{\beta*} \end{bmatrix} = -K_Z \left( \begin{bmatrix} i_\alpha^{\alpha*} & i_\alpha^{\beta*} \\ i_\beta^{\alpha*} & i_\beta^{\beta*} \end{bmatrix} - \begin{bmatrix} i_\alpha^{\alpha} & i_\alpha^{\beta} \\ i_\beta^{\alpha} & i_\beta^{\beta} \end{bmatrix} \right) \cdots\cdots \ (14)$$

In equation 14, $K_Z$ represents a proportional control gain of control of circulating current. The aforementioned control of circulation currents is performed so as to provide voltage command values $v_\alpha^{\alpha*}$, $v_\alpha^{\beta*}$, $v_\beta^{\alpha*}$, and $v_\beta^{\beta*}$ constituting a part of the output voltage command value of the cluster.

The AC input/output current controller 12 controls current to follow an AC output current command value on the three-phase AC output side of the power converter 1. When, for example, using the power converter 1 as a drive device of a three-phase motor, the three-phase motor is connected to the three-phase AC output side, it is possible that an AC output current command value for obtaining a desired motor rotational state is directly provided or motor current flowing in the three-phase motor is determined from cluster current and used for vector control of the three-phase motor.

Further, an internal resistance and the like present in the power converter 1 consume energy accumulated in the DC capacitors in each cluster and then a voltage of the DC capacitor decreases, and therefore, to compensate the consumed energy, the effective power controller 13 adjusts an amount of instantaneous effective power input from the three-phase AC input side and controls a whole DC capacitor voltage average value obtained by averaging voltages of all the DC capacitors in the power converter 1 to follow a predetermined DC capacitor voltage command value. When a command value of instantaneous effective power input from the three-phase AC input side to the power converter 1 is designated as $p^*$, a command value of a voltage of a DC capacitor is designated as $V_C^*$, and a value obtained by averaging voltages of all the DC capacitors is designated as $v_{Cave}$, a d axis current command value $i_s^{d*}$ is represented by equation 15.
[Formula 15]

$$i_s^{d*} = \frac{p^*}{v_s^d} + K_A \left( 1 + \frac{1}{sT_A} \right) \left( V_C^* - v_{Cave} \right) \cdots\cdots \ (15)$$

In equation 15, $K_A$ and $T_A$ represent a proportional control gain of effective power control and a time constant of integral control, respectively.

Further, when a command value of instantaneous reactive power input from the three-phase AC input side to the power converter 1 is designated as $q^*$, a q axis current command value $i_s^{q*}$ is represented by equation 16.
[Formula 16]

$$i_s^{q*} = \frac{q_s^*}{v_s^d} \cdots\cdots \ (16)$$

Next, an operational principle of the DC capacitor voltage balancing controller 21 will be described. The DC capacitor voltage balancing controller 21 is used to control circulating current circulating in the power converter 1 so that each of inner-cluster DC capacitor voltage average values obtained by averaging voltage values of the DC capacitors of the respective clusters follows a whole DC capacitor voltage average value. The DC capacitor voltage balancing controller 21 prepares a circulating current command value for this purpose.

When the inner-cluster DC capacitor voltage average values $v_{Ca}^u{}_{ave}$, $v_{Ca}^v{}_{ave}$, $v_{Ca}^w{}_{ave}$, $v_{Cb}^u{}_{ave}$, $v_{Cb}^v{}_{ave}$, $v_{Cb}^w{}_{ave}$, $V_{Cc}^u{}_{ave}$, $V_{Cc}^v{}_{ave}$, and $v_{Cc}^w{}_{ave}$ of the clusters u-a, v-a, w-a, u-b, v-b, w-b, u-c, v-c, and w-c, respectively, are expressed as a matrix, equation 17 is established.
[Formula 17]

$$\begin{bmatrix} v_{Ca}^u{}_{ave} & v_{Ca}^v{}_{ave} & v_{Ca}^w{}_{ave} \\ v_{Cb}^u{}_{ave} & v_{Cb}^v{}_{ave} & v_{Cb}^w{}_{ave} \\ v_{Cc}^u{}_{ave} & v_{Cc}^v{}_{ave} & v_{Cc}^w{}_{ave} \end{bmatrix} \cdots\cdots \ (17)$$

When the matrix represented in equation 17 is multiplied by transformation matrix $[C^{\alpha\beta O}]$ represented in equation 1 from the left to transform abc coordinates to $\alpha\beta O$ coordinates and then multiplied by transpose matrix $^t[C^{\alpha\beta O}]$ of transformation matrix $[C^{\alpha\beta O}]$ represented in equation 1 from the right to transform uvw coordinates to $\alpha\beta O$ coordinates,

equation 18 is obtained.
[Formula 18]

$$\begin{bmatrix} v_{C\alpha}{}^{\alpha}{}_{ave} & v_{C\alpha}{}^{\beta}{}_{ave} & v_{C\alpha}{}^{0}{}_{ave} \\ v_{C\beta}{}^{\alpha}{}_{ave} & v_{C\beta}{}^{\beta}{}_{ave} & v_{C\beta}{}^{0}{}_{ave} \\ v_{C0}{}^{\alpha}{}_{ave} & v_{C0}{}^{\beta}{}_{ave} & v_{C0}{}^{0}{}_{ave} \end{bmatrix} \cdots\cdots \quad (18)$$

Assuming that the inner-cluster DC capacitor voltage average value was able to be controlled to be a DC capacitor voltage command value $V_C{}^*$, the matrix represented in equation 18 supposedly becomes a matrix represented in equation 19.
[Formula 19]

$$\begin{bmatrix} 0 & 0 & 0 \\ 0 & 0 & 0 \\ 0 & 0 & 3V_C^* \end{bmatrix} \cdots\cdots \quad (19)$$

Therefore, when the elements of the matrix represented in equation 18 are controllable to be the values of the matrix represented in equation 19, the inner-cluster DC capacitor voltage average value with respect to all the clusters can be allowed to be $V_C{}^*$ and therefore an imbalance of voltages of the DC capacitors in the respective bridge cells generated among the clusters can be removed.

In equation 18, since it is conceivable that $v_{C0}{}^{0}{}_{ave}$ is equal, from its definition, to a value three times a value $v_{Cave}$ obtained by averaging voltages of all the DC capacitors, control of this component has been already realized via the effective power control having been described with reference to equation 15. Therefore, with respect to equation 18, eight components other than $v_{C0}{}^{0}{}_{ave}$ are controlled to converge to zero using an inter-star converter balancing controller and an inner-star converter balancing controller to be described next. Of these eight components, $v_{c\alpha}{}^{0}{}_{ave}$, $v_{c\beta}{}^{0}{}_{ave}$, $v_{C0}{}^{\alpha}{}_{ave}$, and $v_{C0}{}^{\beta}{}_{ave}$ are converged to zero and $v_{C\alpha}{}^{\alpha}{}_{ave}$, $v_{C\alpha}{}^{\beta}{}_{ave}$, $v_{C\beta}{}^{\alpha}{}_{ave}$, and $v_{C\beta}{}^{\beta}{}_{ave}$ are converged to zero using the inter-star converter balancing controller and the inner-star converter balancing controller, respectively.

An operational principle of the inter-star converter balancing controller in the DC capacitor voltage balancing controller 21 will be described as follows. The inter-star converter balancing controller inhibits a deviation in inner-cluster DC capacitor voltage average values generated among star converters each including three clusters connected to the same phase, by power transfer among the star converters via control of a positive phase component of circulating current.

When $f_S$ represents a frequency of the three-phase AC input side, $f_M$ represents a frequency of the three-phase AC output side, $\delta_M$ represents an initial phase of the three-phase AC output side based on an initial phase of the three-phase AC input side, and $K_O$ represents a proportional control gain in the inter-star converter balancing controller, $\theta_S$ is defined as equation 20 and $\theta_M$ is defined as equation 21.
[Formula 20]

$$\theta_S = 2\pi f_S t \cdots\cdots \quad (20)$$

[Formula 21]

$$\theta_M = 2\pi f_M t + \delta_M \cdots\cdots \quad (21)$$

Further, a voltage of the three-phase AC input side is assumed as equation 22 and a voltage of the three-phase AC output side is assumed as equation 23. $V_S$ represents an effective value of a line voltage of the three-phase AC input side and $V_M$ represents an effective value of a line voltage of the three-phase AC output side.
[Formula 22]

$$\begin{bmatrix} v_S^\alpha \\ v_S^\beta \end{bmatrix} = V_S \begin{bmatrix} \sin\theta_S \\ -\cos\theta_S \end{bmatrix} \cdots\cdots (22)$$

[Formula 23]

$$\begin{bmatrix} v_{M\alpha} \\ v_{M\beta} \end{bmatrix} = V_M \begin{bmatrix} \sin\theta_M \\ -\cos\theta_M \end{bmatrix} \cdots\cdots (23)$$

Further, current of the three-phase AC input side is assumed as equation 24 and current of the three-phase AC output side is assumed as equation 25. $I_S$ represents an effective value of the current of the three-phase AC input side and $I_M$ represents an effective value of the current of the three-phase AC output side.

[Formula 24]

$$\begin{bmatrix} i_S^\alpha \\ i_S^\beta \end{bmatrix} = \sqrt{3}I_S \begin{bmatrix} \sin(\theta_S + \phi_S) \\ -\cos(\theta_S + \phi_S) \end{bmatrix} \cdots\cdots (24)$$

[Formula 25]

$$\begin{bmatrix} i_{M\alpha} \\ i_{M\beta} \end{bmatrix} = \sqrt{3}I_M \begin{bmatrix} \sin(\theta_M + \phi_M) \\ -\cos(\theta_M + \phi_M) \end{bmatrix} \cdots\cdots (25)$$

Circulating current provided as a command value in the inter-star converter balancing controller is represented by equation 26.

[Formula 26]

$$\begin{bmatrix} i_\alpha^{\alpha*} & i_\alpha^{\beta*} \\ i_\beta^{\alpha*} & i_\beta^{\beta*} \end{bmatrix} = K_0 \begin{bmatrix} -v_{C\alpha}{}^0{}_{ave}\sin\theta_S & v_{C\alpha}{}^0{}_{ave}\cos\theta_S \\ -v_{C\beta}{}^0{}_{ave}\sin\theta_S & v_{C\beta}{}^0{}_{ave}\cos\theta_S \end{bmatrix} - K_0 \begin{bmatrix} -v_{C0}{}^\alpha{}_{ave}\sin\theta_M & -v_{C0}{}^\beta{}_{ave}\sin\theta_M \\ v_{C0}{}^\alpha{}_{ave}\cos\theta_M & v_{C0}{}^\beta{}_{ave}\cos\theta_M \end{bmatrix} \cdots\cdots (26)$$

[Formula 27]

$$\begin{bmatrix} i_a^u & i_a^v & i_a^w \\ i_b^u & i_b^v & i_b^w \\ i_c^u & i_c^v & i_c^w \end{bmatrix} = \sqrt{\frac{2}{3}}K_0 \begin{bmatrix} \Delta v_{Ca}{}^0{}_{ave}\sin\theta_S & \Delta v_{Ca}{}^0{}_{ave}\sin\left(\theta_S - \frac{2}{3}\pi\right) & \Delta v_{Ca}{}^0{}_{ave}\sin\left(\theta_S + \frac{2}{3}\pi\right) \\ \Delta v_{Cb}{}^0{}_{ave}\sin\theta_S & \Delta v_{Cb}{}^0{}_{ave}\sin\left(\theta_S - \frac{2}{3}\pi\right) & \Delta v_{Cb}{}^0{}_{ave}\sin\left(\theta_S + \frac{2}{3}\pi\right) \\ \Delta v_{Cc}{}^0{}_{ave}\sin\theta_S & \Delta v_{Cc}{}^c{}_{ave}\sin\left(\theta_S - \frac{2}{3}\pi\right) & \Delta v_{Cc}{}^0{}_{ave}\sin\left(\theta_S + \frac{2}{3}\pi\right) \end{bmatrix}$$
$$-\sqrt{\frac{2}{3}}K_0 \begin{bmatrix} \Delta v_{C0}{}^u{}_{ave}\sin\theta_M & \Delta v_{C0}{}^v{}_{ave}\sin\theta_M & \Delta v_{C0}{}^w{}_{ave}\sin\theta_M \\ \Delta v_{C0}{}^u{}_{ave}\sin\left(\theta_M - \frac{2}{3}\pi\right) & \Delta v_{C0}{}^v{}_{ave}\sin\left(\theta_M - \frac{2}{3}\pi\right) & \Delta v_{C0}{}^w{}_{ave}\sin\left(\theta_M - \frac{2}{3}\pi\right) \\ \Delta v_{C0}{}^u{}_{ave}\sin\left(\theta_M + \frac{2}{3}\pi\right) & \Delta v_{C0}{}^v{}_{ave}\sin\left(\theta_M + \frac{2}{3}\pi\right) & \Delta v_{C0}{}^w{}_{ave}\sin\left(\theta_M + \frac{2}{3}\pi\right) \end{bmatrix} \cdots\cdots (27)$$

$\Delta v_{Ca}{}^0{}_{ave}$ and the like satisfy the relationship of equation 28.

[Formula 28]

$$\Delta V_{Ca}{}^0{}_{ave} = \sqrt{3}\, V_{C\,ave} - V_{Ca}{}^0{}_{ave} = \sqrt{3}\left( V_{C\,ave} - \frac{V_{Ca}{}^u{}_{ave} + V_{Ca}{}^v{}_{ave} + V_{Ca}{}^w{}_{ave}}{3}\right) \cdots\cdots (28)$$

As understood from equation 27, the inter-star converter balancing controller inputs positive phase current to each star converter. Period average effective power flowing in a cluster formed of this cluster current and a voltage applied to both ends of the cluster is represented by equation 29.

[Formula 29]

$$\begin{bmatrix} p_a^u & p_a^v & p_a^w \\ p_b^u & p_b^v & p_b^w \\ p_c^u & p_c^v & p_c^w \end{bmatrix} = \frac{1}{3}K_0 V_S \begin{bmatrix} \Delta V_{Ca}{}^0{}_{ave} & \Delta V_{Ca}{}^0{}_{ave} & \Delta V_{Ca}{}^0{}_{ave} \\ \Delta V_{Cb}{}^0{}_{ave} & \Delta V_{Cb}{}^0{}_{ave} & \Delta V_{Cb}{}^0{}_{ave} \\ \Delta V_{Cc}{}^0{}_{ave} & \Delta V_{Cc}{}^0{}_{ave} & \Delta V_{Cc}{}^0{}_{ave} \end{bmatrix}$$

$$+ \frac{1}{3}K_0 V_M \begin{bmatrix} \Delta V_{C0}{}^u{}_{ave} & \Delta V_{C0}{}^v{}_{ave} & \Delta V_{C0}{}^w{}_{ave} \\ \Delta V_{C0}{}^u{}_{ave} & \Delta V_{C0}{}^v{}_{ave} & \Delta V_{C0}{}^w{}_{ave} \\ \Delta V_{C0}{}^u{}_{ave} & \Delta V_{C0}{}^v{}_{ave} & \Delta V_{C0}{}^w{}_{ave} \end{bmatrix} \cdots\cdots (29)$$

When equation 29 is applied with $\alpha\beta O$ transformation, equation 30 is obtained.

[Formula 30]

$$\begin{bmatrix} p_\alpha^\alpha & p_\alpha^\beta & p_\alpha^0 \\ p_\beta & p_\beta & p_\beta \\ p_0^\alpha & p_0^\beta & p_0^0 \end{bmatrix} = -\frac{1}{\sqrt{3}}K_0 V_S \begin{bmatrix} 0 & 0 & V_{C\alpha}{}^0{}_{ave} \\ 0 & 0 & V_{C\beta}{}^0{}_{ave} \\ 0 & 0 & 0 \end{bmatrix} - \frac{1}{\sqrt{3}}K_0 V_M \begin{bmatrix} 0 & 0 & 0 \\ 0 & 0 & 0 \\ V_{C0}{}^\alpha{}_{ave} & V_{C0}{}^\beta{}_{ave} & 0 \end{bmatrix} \cdots\cdots (30)$$

Equation 30 means the following, i.e., when, for example, a DC capacitor voltage is thought to have a voltage deviation such as one having a positive value for only a $v_{C\alpha}{}^0{}_{ave}$ component, since $K_O > 0$ and $K_S > 0$, negative effective power is formed for a $P_\alpha{}^0$ component of equation 30. This effective power realizes feedback control in which a voltage deviation such as one having a positive value for the $v_{C\alpha}{}^0{}_{ave}$ component is removed and approaches zero. Equation 30 makes it understood that a one-to-one correspondence is made between the $P_\alpha{}^0$ component and the $v_{C\alpha}{}^0{}_{ave}$ component, between the $P_\beta{}^0$ component and the $v_{C\beta}{}^0{}_{ave}$ component, between the $P_O{}^\alpha$ component and the $v_{C0}{}^\alpha{}_{ave}$ component, and between the $P_O{}^\beta$ component and the $v_{C0}{}^\beta{}_{ave}$ component, whereby, it is understood that the inter-star converter balancing controller can have realized non-interference where control of a certain component causes no interference with other components. In this manner, the inter-star converter balancing controller can inhibit a deviation in inner-cluster DC capacitor voltage average values generated among star converters each including three clusters connected to the same phase, by power transfer among the star converters via control of a positive phase component of circulating current.

Next, an operational principle of the inner-star converter balancing controller in the DC capacitor voltage balancing controller 21 will be described as follows. The inner-star converter balancing controller inhibits a deviation in inner-cluster DC capacitor voltage average values generated among the clusters by power transfer among the clusters in the respective star converters via control of a reverse phase component of circulating current. The inter-star converter balancing controller, having been already described, used, for control, a frequency $f_S$ component of the three-phase AC input side and a frequency $f_M$ component of the three-phase AC output side, but the inner-star converter balancing controller uses, for control, the frequency $f_S$ component of the three-phase AC input side. Since the circuit configuration of the power converter 1 is symmetrical as described above, the frequency $f_M$ component of the three-phase AC output side is also usable.

Circulating current provided as a command value in the inner-star converter balancing controller is represented by equation 31.

[Formula 31]

$$\begin{bmatrix} i_\alpha^{\alpha*} & i_\alpha^{\beta*} \\ i_\beta^{\alpha*} & i_\beta^{\beta*} \end{bmatrix} = -K_1 \begin{bmatrix} v_{C\alpha}\sin(\theta_S + \gamma_\alpha) & v_{C\alpha}\cos(\theta_S + \gamma_\alpha) \\ v_{C\beta}\sin(\theta_S + \gamma_\beta) & v_{C\beta}\cos(\theta_S + \gamma_\beta) \end{bmatrix} \cdots\cdots \quad (31)$$

Equation 31 is associated with equation 32 to equation 35. Further, $K_1$ represents a proportional control gain in the inner-star converter balancing controller.

[Formula 32]

$$v_{C\alpha} = \sqrt{\left(v_{C\alpha}^{\alpha}{}_{ave}\right)^2 + \left(v_{C\alpha}^{\beta}{}_{ave}\right)^2} \cdots\cdots \quad (32)$$

[Formula 33]

$$\gamma_\alpha = \tan^{-1} \frac{v_{C\alpha}^{\beta}{}_{ave}}{v_{C\alpha}^{\alpha}{}_{ave}} \cdots\cdots \quad (33)$$

[Formula 34]

$$v_{C\beta} = \sqrt{\left(v_{C\beta}^{\alpha}{}_{ave}\right)^2 + \left(v_{C\beta}^{\beta}{}_{ave}\right)^2} \cdots\cdots \quad (34)$$

[Formula 35]

$$\gamma_\beta = \tan^{-1} \frac{v_{C\beta}^{\beta}{}_{ave}}{v_{C\beta}^{\alpha}{}_{ave}} \cdots\cdots \quad (35)$$

[Formula 36]

$$
\begin{bmatrix} i_a^u & i_a^v & i_a^w \\ i_b^u & i_b^v & i_b^w \\ i_c^u & i_c^v & i_c^w \end{bmatrix}
= -\sqrt{\frac{2K_1}{3}}
\begin{bmatrix}
v_{Ca}^{\alpha}{}_{ave}\sin\theta_s + v_{Ca}^{\beta}{}_{ave}\cos\theta_s & v_{Ca}^{\alpha}{}_{ave}\sin\!\left(\theta_s+\frac{2}{3}\pi\right) + v_{Ca}^{\beta}{}_{ave}\cos\!\left(\theta_s+\frac{2}{3}\pi\right) & v_{Ca}^{\alpha}{}_{ave}\sin\!\left(\theta_s-\frac{2}{3}\pi\right) + v_{Ca}^{\beta}{}_{ave}\cos\!\left(\theta_s-\frac{2}{3}\pi\right) \\[4pt]
v_{Cb}^{\alpha}{}_{ave}\sin\theta_s + v_{Cb}^{\beta}{}_{ave}\cos\theta_s & v_{Cb}^{\alpha}{}_{ave}\sin\!\left(\theta_s+\frac{2}{3}\pi\right) + v_{Cb}^{\beta}{}_{ave}\cos\!\left(\theta_s+\frac{2}{3}\pi\right) & v_{Cb}^{\alpha}{}_{ave}\sin\!\left(\theta_s-\frac{2}{3}\pi\right) + v_{Cb}^{\beta}{}_{ave}\cos\!\left(\theta_s-\frac{2}{3}\pi\right) \\[4pt]
v_{Cc}^{\alpha}{}_{ave}\sin\theta_s + v_{Cc}^{\beta}{}_{ave}\cos\theta_s & v_{Cc}^{\alpha}{}_{ave}\sin\!\left(\theta_s+\frac{2}{3}\pi\right) + v_{Cc}^{\beta}{}_{ave}\cos\!\left(\theta_s+\frac{2}{3}\pi\right) & v_{Cc}^{\alpha}{}_{ave}\sin\!\left(\theta_s-\frac{2}{3}\pi\right) + v_{Cc}^{\beta}{}_{ave}\cos\!\left(\theta_s-\frac{2}{3}\pi\right)
\end{bmatrix}
\cdots \quad (36)
$$

Equation 36 makes it understood that the inner-star converter balancing controller inputs reverse phase current to the respective star converters. The phase is determined by a ratio of "$v_{Ca}^{\alpha}{}_{ave}$, $v_{Cb}^{\alpha}{}_{ave}$, and $v_{Cc}^{\alpha}{}_{ave}$" and "$v_{Ca}^{\beta}{}_{ave}$,

$v_{Cb}{}^\beta{}_{ave}$, and $v_{Cc}{}^\beta{}_{ave}$". Period average effective power flowing in a cluster formed of this cluster current and a voltage applied to both ends of the cluster is represented by equation 37.

[Formula 37]

$$\begin{bmatrix} p_a^u & p_a^v & p_a^w \\ p_b^u & p_b^v & p_b^w \\ p_c^u & p_c^v & p_c^w \end{bmatrix} = -\frac{1}{3}K_1V_S \begin{bmatrix} V_{Ca}{}^\alpha{}_{ave} & -\frac{1}{2}V_{Ca}{}^\alpha{}_{ave}+\frac{\sqrt{3}}{2}V_{Ca}{}^\beta{}_{ave} & -\frac{1}{2}V_{Ca}{}^\alpha{}_{ave}-\frac{\sqrt{3}}{2}V_{Ca}{}^\beta{}_{ave} \\ V_{Cb}{}^\alpha{}_{ave} & -\frac{1}{2}V_{Cb}{}^\alpha{}_{ave}+\frac{\sqrt{3}}{2}V_{Cb}{}^\beta{}_{ave} & -\frac{1}{2}V_{Cb}{}^\alpha{}_{ave}-\frac{\sqrt{3}}{2}V_{Cb}{}^\beta{}_{ave} \\ V_{Cc}{}^\alpha{}_{ave} & -\frac{1}{2}V_{Cc}{}^\alpha{}_{ave}+\frac{\sqrt{3}}{2}V_{Cc}{}^\beta{}_{ave} & -\frac{1}{2}V_{Cc}{}^\alpha{}_{ave}-\frac{\sqrt{3}}{2}V_{Cc}{}^\beta{}_{ave} \end{bmatrix} \cdots\cdots (37)$$

When equation 37 is applied with $\alpha\beta O$ transformation, equation 38 is obtained.

[Formula 38]

$$\begin{bmatrix} p_\alpha^\alpha & p_\alpha^\beta & p_\alpha^0 \\ p_\beta^\alpha & p_\beta^\beta & p_\beta^0 \\ p_0^\alpha & p_0^\beta & p_0^0 \end{bmatrix} = -\frac{1}{\sqrt{6}}K_1V_S \begin{bmatrix} V_{C\alpha}{}^\alpha{}_{ave} & V_{C\alpha}{}^\beta{}_{ave} & 0 \\ V_{C\beta}{}^\alpha{}_{ave} & V_{C\beta}{}^\beta{}_{ave} & 0 \\ 0 & 0 & 0 \end{bmatrix} \cdots\cdots (38)$$

Equation 38 means the following, i.e., when, for example, a DC capacitor voltage is thought to have a voltage deviation such as one having a positive value for only a $v_{C\alpha}{}^\alpha{}_{ave}$ component, since $K_1 > 0$ and $K_S > 0$, negative effective power is formed for a $P_\alpha{}^\alpha$ component of equation 38. This effective power realizes feedback control in which a voltage deviation such as one having a positive value for the $v_{C\alpha}{}^\alpha{}_{ave}$ component is removed and approaches zero. Equation 38 makes it understood that a one-to-one correspondence is made between the $P_\alpha{}^\alpha$ component and the $V_{C\alpha}{}^\alpha{}_{ave}$ component, between the $P_\alpha{}^\beta$ component and the $v_{C\alpha}{}^\beta{}_{ave}$ component, between the $P_\beta{}^\alpha$ component and the $v_{C\beta}{}^\alpha{}_{ave}$ component, and between the $P_\beta{}^\beta$ component and the $v_{C\beta}{}^\beta{}_{ave}$ component, whereby, it is understood that the inner-star converter balancing controller can have realized non-interference where control of a certain component causes no interference with other components. In this manner, the inner-star converter balancing controller can inhibit a deviation in inner-cluster DC capacitor voltage average values generated among the clusters by power transfer among the clusters in the respective star converters via control of a reverse phase component of circulating current.

Next, balancing control of voltages of the DC capacitors of the bridge cells in the same cluster by the individual balancing controller 14 will be described. The individual balancing controller 14 outputs, to each cluster, a voltage having a phase equal or opposite to that of current flowing in the cluster to cause effective power to flow in or out, whereby, voltages of the DC capacitors of the respective bridge cells in each cluster is caused to follow an inner-cluster DC capacitor voltage average value for the cluster including the DC capacitors of the bridge cells. As one example, description will be made on the cluster u-a as follows. There is represented in equation 39 a voltage command value $v_{Ba}{}^{uj*}$ for controlling effective power input to the power converter 1 to cause voltages of the DC capacitor of a j-th bridge cell (wherein, j = 1 to n) in the cluster u-a to follow an inner cluster DC capacitor voltage average value for the cluster including the DC capacitor of the bridge cell.

[Formula 39]

$$v_{Ba}{}^{uj*} = K_C \left( v_{Ca}{}^u{}_{ave} - v_{Ca}{}^{uj} \right) i_a{}^u \cdots\cdots (39)$$

Combined use of this balancing control and phase shift PWM control makes it possible to easily expand the number of stages by adding equation 39 according to the number of stages.

The circulating current controller 11 controls circulating current circulating in the power converter 1 to follow a circulating current command value prepared by the DC capacitor voltage balancing controller 21.

Each control using circulating current by the circulating current controller 11, and the inter-star converter balancing controller and the inner-star converter balancing controller in the DC capacitor voltage balancing controller 21 described above can remove an imbalance in voltages of the DC capacitors among the respective clusters and among the respective bridge cells having been conventionally generated due to a variation in circuit elements constituting the power converter 1 and others.

Further, in addition to the above-described configuration, in order to be able to inhibit a pulsation of a voltage of the DC capacitor generated when the three-phase AC output side is low in frequency and to stably control the DC capacitor regardless of a frequency of the three-phase AC output side, the circulating current controller 11 may further include a DC capacitor voltage fluctuation inhibiting controller. The DC capacitor voltage fluctuation inhibiting controller will be described below.

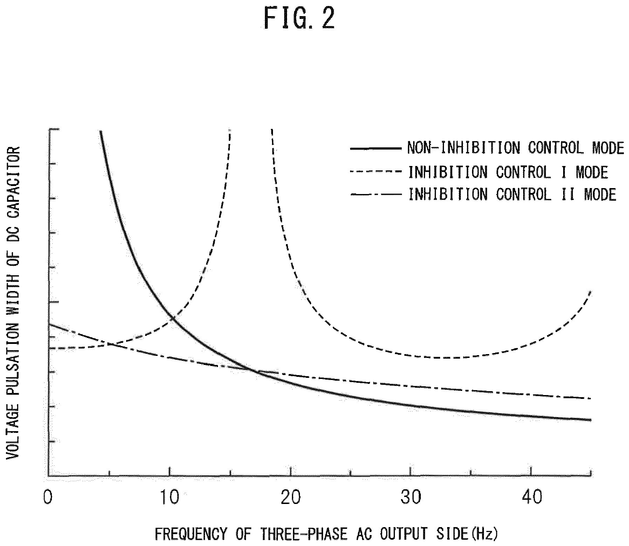

FIG. 2 is a chart illustrating operations of the DC capacitor voltage fluctuation inhibiting controller. A DC capacitor voltage fluctuation inhibiting controller 22 includes a non-inhibition control mode, an inhibition control I mode, and an inhibition control II mode.

Initially, the "non-inhibition control mode" will be described. The non-inhibition control mode is a mode causing circulating current other than the circulating current used for balancing control having been already described not to flow in the power converter 1, as expressed in equation 40.

[Formula 40]

$$\begin{bmatrix} i_\alpha^{\alpha*} & i_\alpha^{\beta*} \\ i_\beta^{\alpha*} & i_\beta^{\beta*} \end{bmatrix} = \begin{bmatrix} 0 & 0 \\ 0 & 0 \end{bmatrix} \cdots \cdots (40)$$

In this case, each of current from the three-phase AC input side and current to the three-phase AC output side is divided into one-third to flow in each cluster and therefore, frequency components included in cluster current are a frequency $f_S$ of the current of the three-phase AC input side and a frequency $f_M$ of the current of the three-phase AC output side. A voltage applied to both ends of the cluster also includes the frequency $f_S$ of the current of the three-phase AC input side and the frequency $f_M$ of the current of the three-phase AC output side. Since frequency components included in an AC voltage fluctuation of the DC capacitor are the same as frequency components included in instantaneous effective power flowing in the cluster, the AC voltage fluctuation of the DC capacitor includes frequency components $2f_S$, $2f_M$, and $f_S \pm f_M$. In general, in a modular multilevel cascade converter, as illustrated by the solid line in FIG. 2, a pulsation width (AC voltage fluctuation width) is inversely proportional to a frequency included in an AC voltage fluctuation. Therefore, in the case of the non-inhibition control mode, when the frequency $f_S$ of the current of the three-phase AC output side has approached zero or the frequency $f_M$ of the current of the three-phase AC input side has approached zero, a pulsation width of a voltage of the DC capacitor rapidly increases, resulting in difficulty in operation continuation.

Next, the inhibition control I mode will be described. In general, instantaneous effective power fed to each star converter in the power converter 1 from the three-phase AC input side is constant, but on the other hand, instantaneous effective power fed to the three-phase AC output side from each star converter fluctuates with a factor of 2 of a frequency $f_M$ of current of the three-phase AC output side. When the frequency $f_M$ of the current of the three-phase AC output side has approached zero, a state where the instantaneous effective power fed to the three-phase AC output side is larger or smaller than the instantaneous effective power being fed from the three-phase AC input side continues for "1/(4$f_M$)" seconds and during this period, the DC capacitor continues to perform charge or discharge averagely. Therefore, for operation continuation at such a low frequency, a larger DC capacitor capacitance is necessary.

In the inhibition control I mode of the DC capacitor voltage fluctuation inhibiting controller 22, circulating current is controlled as expressed in equation 41 and instantaneous effective power fed to each star converter from the three-phase AC input side is temporally changed in harmony with instantaneous effective power fed to the three-phase AC output side to cancel a frequency component of $2f_M$ included in an AC voltage fluctuation of the DC capacitor.

[Formula 41]

$$\begin{bmatrix} i_\alpha^{\alpha*} & i_\alpha^{\beta*} \\ i_\beta^{\alpha*} & i_\beta^{\beta*} \end{bmatrix} = \frac{I_S \cos\phi_S}{\sqrt{2}\cos\phi_M} \begin{bmatrix} -\sin\theta_S\cos(2\theta_M+\phi_M) & \cos\theta_S\cos(2\theta_M+\phi_M) \\ \sin\theta_S\sin(2\theta_M+\phi_M) & -\cos\theta_S\sin(2\theta_M+\phi_M) \end{bmatrix} \cdots \cdots (41)$$

In equation 41, $\phi_S$ represents a power factor angle of the three-phase AC input side and $\phi_M$ represents a power factor angle of the three-phase AC output side. An operation principle of the inhibition control I mode based on equation 41 will be described as follows.

Current components of the three-phase AC input side of cluster current and current components of the three-phase AC output side thereof are represented by equation 42 from equation 24 and equation 25.

[Formula 42]

$$
\begin{bmatrix} i_a^u & i_a^v & i_a^w \\ i_b^u & i_b^v & i_b^w \\ i_c^u & i_c^v & i_c^w \end{bmatrix} = \frac{\sqrt{2}}{3} I_S \begin{bmatrix} \sin(\theta_S + \phi_S) & \sin\left(\theta_S + \phi_S - \frac{2}{3}\pi\right) & \sin\left(\theta_S + \phi_S + \frac{2}{3}\pi\right) \\ \sin(\theta_S + \phi_S) & \sin\left(\theta_S + \phi_S - \frac{2}{3}\pi\right) & \sin\left(\theta_S + \phi_S + \frac{2}{3}\pi\right) \\ \sin(\theta_S + \phi_S) & \sin\left(\theta_S + \phi_S - \frac{2}{3}\pi\right) & \sin\left(\theta_S + \phi_S + \frac{2}{3}\pi\right) \end{bmatrix}
$$

$$
+ \frac{\sqrt{2}}{3} I_M \begin{bmatrix} \sin(\theta_M + \phi_M) & \sin(\theta_M + \phi_M) & \sin(\theta_M + \phi_M) \\ \sin\left(\theta_M + \phi_M - \frac{2}{3}\pi\right) & \sin\left(\theta_M + \phi_M - \frac{2}{3}\pi\right) & \sin\left(\theta_M + \phi_M - \frac{2}{3}\pi\right) \\ \sin\left(\theta_M + \phi_M + \frac{2}{3}\pi\right) & \sin\left(\theta_M + \phi_M + \frac{2}{3}\pi\right) & \sin\left(\theta_M + \phi_M + \frac{2}{3}\pi\right) \end{bmatrix} \cdots\cdots (42)
$$

Instantaneous effective power flowing in a cluster formed of the current components of the three-phase AC input side of cluster current and the current components of the three-phase AC output side thereof expressed in equation 42 and a voltage applied to both ends of the cluster is represented by equation 43.
[Formula 43]

$$
\begin{bmatrix} p_a^u & p_a^v & p_a^w \\ p_b^u & p_b^v & p_b^w \\ p_c^u & p_c^v & p_c^w \end{bmatrix} = \frac{1}{3\sqrt{3}}(V_S I_S \cos\phi_S - V_M I_M \cos\phi_M) \begin{bmatrix} 1 & 1 & 1 \\ 1 & 1 & 1 \\ 1 & 1 & 1 \end{bmatrix}
$$

$$
+ \frac{V_M I_M}{3\sqrt{3}} \begin{bmatrix} \cos(2\theta_M + \phi_M) & \cos(2\theta_M + \phi_M) & \cos(2\theta_M + \phi_M) \\ \cos\left(2\theta_M + \phi_M + \frac{2\pi}{3}\right) & \cos\left(2\theta_M + \phi_M + \frac{2\pi}{3}\right) & \cos\left(2\theta_M + \phi_M + \frac{2\pi}{3}\right) \\ \cos\left(2\theta_M + \phi_M - \frac{2\pi}{3}\right) & \cos\left(2\theta_M + \phi_M - \frac{2\pi}{3}\right) & \cos\left(2\theta_M + \phi_M - \frac{2\pi}{3}\right) \end{bmatrix} \cdots\cdots (43)
$$

In equation 43, especially to consider only inhibition control, only DC components and a $2f_M$ component of instantaneous effective power are expressed for simple expression, and the expression of a $2f_S$ component and $f_S \pm f_M$ components is omitted.

When circulating current expressed in equation 41 is inversely transformed onto the uvw coordinate axis and the abc coordinate axis, equation 44 is obtained.
[Formula 44]

Instantaneous effective power flowing in a cluster formed of the circulating current components of cluster current expressed in equation 44 and a voltage applied to both ends of the cluster is represented by equation 45.

[Formula 45]

$$
\begin{bmatrix} i_a^u & i_a^v & i_a^w \\ i_b^u & i_b^v & i_b^w \\ i_c^u & i_c^v & i_c^w \end{bmatrix}
= -\frac{\sqrt{2}I_S\cos\phi_S}{3\cos\phi_M}
\begin{bmatrix}
\sin\theta_S\cos(2\theta_M+\phi_N) & \sin\left(\theta_S-\frac{2\pi}{3}\right)\cos(2\theta_M+\phi_M) & \sin\left(\theta_S+\frac{2\pi}{3}\right)\cos(2\theta_M+\phi_M) \\[6pt]
\sin\theta_S\cos\left(2\theta_M+\phi_M+\frac{2\pi}{3}\right) & \sin\left(\theta_S-\frac{2\pi}{3}\right)\cos\left(2\theta_M+\phi_M+\frac{2\pi}{3}\right) & \sin\left(\theta_S+\frac{2\pi}{3}\right)\cos\left(2\theta_M+\phi_M+\frac{2\pi}{3}\right) \\[6pt]
\sin\theta_S\cos\left(2\theta_M+\phi_M-\frac{2\pi}{3}\right) & \sin\left(\theta_S-\frac{2\pi}{3}\right)\cos\left(2\theta_M+\phi_M-\frac{2\pi}{3}\right) & \sin\left(\theta_S+\frac{2\pi}{3}\right)\cos\left(2\theta_M+\phi_M-\frac{2\pi}{3}\right)
\end{bmatrix}
\cdots\cdots (44)
$$

21

$$\begin{bmatrix} p_a^u & p_a^v & p_a^w \\ p_b^u & p_b^v & p_b^w \\ p_c^u & p_c^v & p_c^w \end{bmatrix}$$

$$= -\frac{V_S I_S \cos\phi_S}{3\sqrt{3}\cos\phi_M} \begin{bmatrix} \cos(2\theta_M + \phi_M) & \cos(2\theta_M + \phi_M) & \cos(2\theta_M + \phi_M) \\ \cos\left(2\theta_M + \phi_M + \frac{2\pi}{3}\right) & \cos\left(2\theta_M + \phi_M + \frac{2\pi}{3}\right) & \cos\left(2\theta_M + \phi_M + \frac{2\pi}{3}\right) \\ \cos\left(2\theta_M + \phi_M - \frac{2\pi}{3}\right) & \cos\left(2\theta_M + \phi_M - \frac{2\pi}{3}\right) & \cos\left(2\theta_M + \phi_M - \frac{2\pi}{3}\right) \end{bmatrix} \cdots\cdots (45)$$

In equation 45, especially to consider only inhibition control, only DC components and a $2f_M$ component of instantaneous effective power are expressed for simple expression, and the expression of $f_S \pm f_M$ components, $2(f_S \pm f_M)$ components, and $f_S \pm 3f_M$ components is omitted.

Since $P = \sqrt{3}V_S I_S \cos\phi_S = \sqrt{3}V_M I_M \cos\phi_M$, the second term of the right side of equation 43 and the right side of equation 45 cancel each other. In other words, the inhibition control I mode of the DC capacitor voltage fluctuation inhibiting controller 22 controls circulating current as expressed in equation 41 and temporally changes instantaneous effective power fed to each star converter from the three-phase AC input side in harmony with instantaneous effective power fed to the three-phase AC output side, whereby a frequency component of $2f_M$ included in an AC voltage fluctuation of the DC capacitor can be cancelled.

When the DC capacitor voltage fluctuation inhibiting controller 22 operates in accordance with the inhibition control I mode, cluster current includes $f_S \pm 2f_M$ components in addition to an $f_S$ component and an $f_M$ component. Further, a DC voltage fluctuation of the DC capacitor includes a $2f_S$ component, $f_S \pm f_M$ components, $2(f_S \pm f_M)$ components, and $f_S \pm 3f_M$ components. Therefore, in the case of the inhibition control I mode, as illustrated by the dotted lines in FIG. 2, operation continuation can be realized at a current frequency $f_M$ of about 0 on the three-phase AC output side in which operation continuation was difficult in the non-inhibition control mode. However, in a vicinity of $f_M = f_S/3$ or $f_M = f_S$, operation continuation is difficult.

Next, the inhibition control II mode will be described below. The inhibition control II mode of the DC capacitor voltage fluctuation inhibiting controller 22 controls circulating current as expressed in equation 46 and temporally changes instantaneous effective power fed to each star converter from the three-phase AC input side in harmony with instantaneous effective power fed to the three-phase AC output side, using only a frequency component of $f_S + 2f_M$.

[Formula 46]

$$\begin{bmatrix} i_\alpha^{\alpha*} & i_\alpha^{\beta*} \\ i_\beta^{\alpha*} & i_\beta^{\beta*} \end{bmatrix} = \frac{I_S \cos\phi_S}{\sqrt{2}\cos\phi_M} \begin{bmatrix} -\sin(\theta_S + 2\theta_M + \phi_M) & \cos(\theta_S + 2\theta_M + \phi_M) \\ -\cos(\theta_S + 2\theta_M + \phi_M) & -\sin(\theta_S + 2\theta_M + \phi_M) \end{bmatrix} \cdots\cdots (46)$$

When circulating current expressed in equation 46 is inversely transformed onto the uvw coordinate axis and the abc coordinate axis, equation 47 is obtained.

[Formula 47]

[Formula 47]

$$\begin{bmatrix} i_a^\Delta & i_b^\Delta & i_c^\Delta \\ i_a^\gamma & i_b^\gamma & i_c^\gamma \\ i_a^u & i_b^u & i_c^u \end{bmatrix} = \frac{\sqrt{2}\,I_S \cos\phi_S}{3\cos\phi_N}$$
$$\times \begin{bmatrix} \sin(\theta_S + 2\theta_M + \phi_M) & \sin\left(\theta_S + 2\theta_M + \phi_M - \frac{2\pi}{3}\right) & \sin\left(\theta_S + 2\theta_M + \phi_M + \frac{2\pi}{3}\right) \\ \sin\left(\theta_S + 2\theta_M + \phi_M + \frac{2\pi}{3}\right) & \sin(\theta_S + 2\theta_M + \phi_M) & \sin\left(\theta_S + 2\theta_M + \phi_M - \frac{2\pi}{3}\right) \\ \sin\left(\theta_S + 2\theta_M + \phi_M - \frac{2\pi}{3}\right) & \sin\left(\theta_S + 2\theta_M + \phi_M + \frac{2\pi}{3}\right) & \sin(\theta_S + 2\theta_M + \phi_M) \end{bmatrix} \quad \cdots\cdots (47)$$

Instantaneous effective power flowing in a cluster formed of the current components of the three-phase AC input side of cluster current and the current components of the three-phase AC output side thereof expressed in equation 47 and a voltage applied to both ends of the cluster is represented by equation 48.
[Formula 48]

$$\begin{bmatrix} p_a^u & p_a^v & p_a^w \\ p_b^u & p_b^v & p_b^w \\ p_c^u & p_c^v & p_c^w \end{bmatrix}$$

$$= -\frac{V_S I_S \cos\phi_S}{3\sqrt{3}\cos\phi_M}\begin{bmatrix} \cos(2\theta_M+\phi_M) & \cos(2\theta_M+\phi_M) & \cos(2\theta_M-\phi_M) \\ \cos\left(2\theta_M+\phi_M+\dfrac{2\pi}{3}\right) & \cos\left(2\theta_M+\phi_M+\dfrac{2\pi}{3}\right) & \cos\left(2\theta_M+\phi_M+\dfrac{2\pi}{3}\right) \\ \cos\left(2\theta_M+\phi_M-\dfrac{2\pi}{3}\right) & \cos\left(2\theta_M+\phi_M-\dfrac{2\pi}{3}\right) & \cos\left(2\theta_M+\phi_M-\dfrac{2\pi}{3}\right) \end{bmatrix} \quad \cdots\cdots \quad (48)$$

In equation 48, especially to consider only inhibition control, only DC components and a $2f_M$ component of instantaneous effective power are expressed for a simple expression, and the expression of $f_S \pm f_M$ components, $2(f_S + f_M)$ component, and an $f_S + 3f_M$ component is omitted.

Since $P = \sqrt{3}V_S I_S \cos\phi_S = \sqrt{3}V_M I_M \cos\phi_M$, the second term of the right side of equation 43 and the right side of equation 48 cancel each other. In other words, when the inhibition control II mode of the DC capacitor voltage fluctuation inhibiting controller 22 controls circulating current as expressed in equation 46, the circulating current includes only an $f_S + 2f_M$ component. As a result, cluster current includes an $f_S + 2f_M$ component in addition to an $f_S$ component and an $f_M$ component. Further, an AC voltage fluctuation of the DC capacitor includes a $2f_S$ component, an $f_S + f_M$ component, a $2(f_S \pm f_M)$ component, and an $f_S + 3f_M$ component. Therefore, in a vicinity of $f_M = 0$ where operation continuation was difficult in the non-inhibition control mode as described above and in a vicinity of $f_M = f_S/3$ where operation continuation was difficult in the inhibition control I mode as described above, use of the inhibition control II mode (illustrated by the dashed-dotted line in FIG. 2) can realize operation continuation.

In summary, as illustrated in FIG. 2, it is understood that it is effective to operate the power converter 1 in the inhibition control I mode or the inhibition control II mode in a vicinity of $f_M = 0$, to operate the power converter 1 in the inhibition control II mode from a vicinity of $f_M = 0$ to a vicinity of $f_M = f_S/3$, and to operate the power converter 1 in the non-inhibition control mode or the inhibition control II mode in a frequency region of more than $f_S/3$. Therefore, when the DC capacitor voltage fluctuation inhibiting controller 22 is provided in the circulating current controller 11 and then the power converter 1 is operated by appropriately switching the non-inhibition control mode, the inhibition control I mode, and the inhibition control II mode as described above according to a frequency of current of the three-phase AC output side, pulsation inhibiting control of a voltage of the DC capacitor can be stably performed regardless of a frequency of the three-phase AC output side. Further, since pulsation inhibiting control by the DC capacitor voltage fluctuation inhibiting controller 22 is realized using circulating current, DC capacitor voltage fluctuation inhibiting control can be realized without interfering with control of input/output currents.

In this case, the circulating current controller 11 controls circulating current circulating in the power converter 1 to follow a circulating current command value obtained by combining a circulating current command value prepared by the DC capacitor voltage balancing controller 21 and a circulating current command value prepared by the DC capacitor voltage fluctuation inhibiting controller 22.

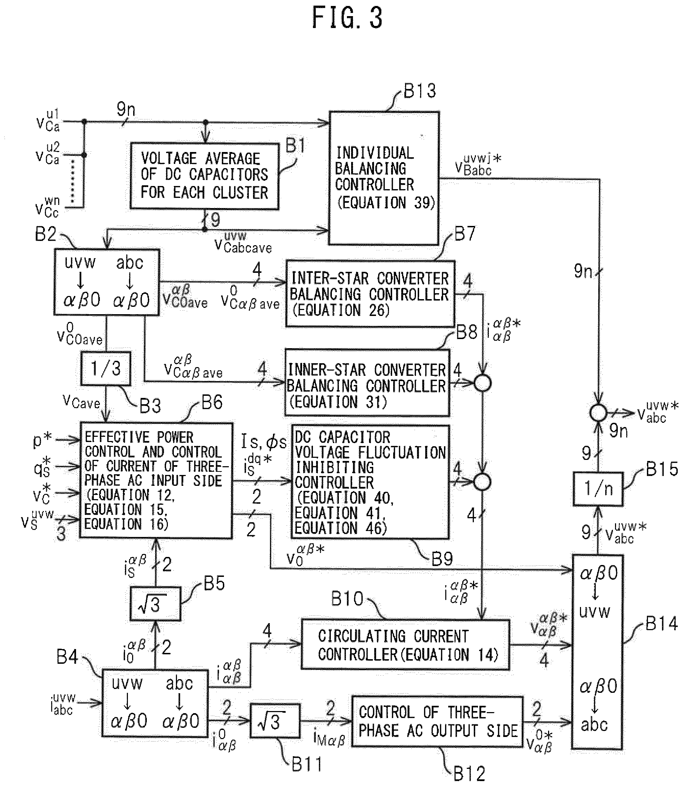

The control apparatus operated based on the equations described above is illustrated as a block diagram in FIG. 3. FIG. 3 is a block diagram illustrating the control apparatus of the power converter according to the present invention. In FIG. 3, a part of currents and voltages of the respective phases are collectively expressed as listed in Table 1 to Table 4.

Table 1

| $i_{abc}^{uvw}$ | $i_a^u, i_a^v, i_a^w, i_b^u, i_b^v, i_b^w, i_c^u, i_c^v, i_c^w$ |
|---|---|
| $i_{\alpha\beta}^{\alpha\beta}$ | $i_\alpha^\alpha, i_\alpha^\beta, i_\beta^\alpha, i_\beta^\beta$ |
| $i_{\alpha\beta}^0$ | $i_\alpha^0, i_\beta^0$ |
| $i_0^{\alpha\beta}$ | $i_0^\alpha, i_0^\beta$ |
| $i_s^{\alpha\beta}$ | $i_s^\alpha, i_s^\beta$ |
| $i_{M\alpha\beta}$ | $i_{M\alpha}, i_{M\beta}$ |
| $i_{\alpha\beta}^{\alpha\beta*}$ | $i_\alpha^{\alpha*}, i_\alpha^{\beta*}, i_\beta^{\alpha*}, i_\beta^{\beta*}$ |

As listed in Table 1, cluster currents $i_a^u$, $i_a^v$, $i_a^w$, $i_b^u$, $i_b^v$, $i_b^w$, $i_c^u$, $i_c^v$, and $i_c^w$ flowing in the clusters u-a, v-a, w-a, u-b, v-b, w-b, u-c, v-c, and w-c, respectively, are expressed by $i_{abc}^{uvw}$ in FIG. 3. Currents $i_\alpha^\alpha$, $i_\alpha^\beta$, $i_\beta^\alpha$, and $i_\beta^\beta$ (i.e., circulating currents), currents $i_\alpha^0$ and $i_\beta^0$, and currents $i_0^\alpha$ and $i_0^\beta$ obtained by $\alpha\beta$O transformation of these cluster currents are expressed by $i_{\alpha\beta}^{\alpha\beta}$, $i_{\alpha\beta}^0$, and $i_0^{\alpha\beta}$ in FIG. 3, respectively. Further, currents $i_s^\alpha$ and $i_s^\beta$ after $\alpha\beta$O transformation of currents of the three-phase AC input side are expressed by $i_s^{\alpha\beta}$ in FIG. 3, and currents $i_{M\alpha}$ and $i_{M\beta}$ after $\alpha\beta$O transformation of currents of the three-phase AC output side are expressed by $i_{M\alpha\beta}$ in FIG. 3. Further, circulating current command values $i_\alpha^{\alpha*}$, $i_\alpha^{\beta*}$, $i_\beta^{\alpha*}$, and $i_\beta^{\beta*}$, are expressed by $i_{\alpha\beta}^{\alpha\beta*}$ in FIG. 3.

Table 2

| $v_{abc}^{uvw*}$ | $v_a^{u*}, v_a^{v*}, v_a^{w*}, v_b^{u*}, v_b^{v*}, v_b^{w*}, v_c^{u*}, v_c^{v*}, v_c^{w*}$ |
|---|---|
| $v_{\alpha\beta}^{\alpha\beta*}$ | $v_\alpha^{\alpha*}, v_\alpha^{\beta*}, v_\beta^{\alpha*}, v_\beta^{\beta*}$ |
| $v_{\alpha\beta}^{0*}$ | $v_\alpha^{0*}, v_\beta^{0*}$ |
| $v_0^{\alpha\beta*}$ | $v_0^{\alpha*}, v_0^{\beta*}$ |
| $v_s^{uvw}$ | $v_s^u, v_s^v, v_s^w$ |

As listed in Table 2, voltage command values $v_a^{u*}$, $v_a^{v*}$, $v_a^{w*}$, $v_b^{u*}$, $v_b^{v*}$, $v_b^{w*}$, $v_c^{u*}$, $v_c^{v*}$, and $v_c^{w*}$ for controlling respective output voltages of the clusters u-a, v-a, w-a, u-b, v-b, w-b, u-c, v-c, and w-c, respectively, are expressed by $v_{abc}^{uvw*}$ in FIG. 3. Voltage command values $v_\alpha^{\alpha*}$, $v_\alpha^{\beta*}$, $v_\beta^{\alpha*}$, and $v_\beta^{\beta*}$, voltage command values $v_\alpha^{0*}$ and $v_\beta^{0*}$, and voltage command values $v_0^{\alpha*}$ and $v_0^{\beta*}$ obtained by $\alpha\beta$O transformation of these voltage command values are expressed by $v_{\alpha\beta}^{\alpha\beta*}$, $v_{\alpha\beta}^{0*}$, and $v_0^{\alpha\beta*}$ in FIG. 3, respectively. Voltages $v_s^u$, $v_s^v$, and $v_s^w$ of the power supplies of the three-phase AC input side are expressed by $v_s^{uvw}$ in FIG. 3.

Table 3

| $v_{Cabc}^{uvw}{}_{ave}$ | $v_{Ca}^u{}_{ave}, v_{Ca}^v{}_{ave}, v_{Ca}^w{}_{ave}, v_{Cb}^u{}_{ave}, v_{Cb}^v{}_{ave}, v_{Cb}^w{}_{ave}, v_{Cc}^u{}_{ave}, v_{Cc}^v{}_{ave}, v_{Cc}^w{}_{ave}$ |
|---|---|
| $v_{C\alpha\beta}^{\alpha\beta}{}_{ave}$ | $v_{C\alpha}^\alpha{}_{ave}, v_{C\alpha}^\beta{}_{ave}, v_{C\beta}^\alpha{}_{ave}, v_{C\beta}^\beta{}_{ave}$ |
| $v_{C0}^{\alpha\beta}{}_{ave}$ | $v_{C0}^\alpha{}_{ave}, v_{C0}^\beta{}_{ave}$ |
| $v_{C\alpha\beta}^0{}_{ave}$ | $v_{C\alpha}^0{}_{ave}, v_{C\beta}^0{}_{ave}$ |

As listed in Table 3, inner-cluster DC capacitor voltage average values $v_{Ca}^u{}_{ave}$, $v_{Ca}^v{}_{ave}$, $v_{Ca}^w{}_{ave}$, $v_{Cb}^u{}_{ave}$,

$v_{Cb}{}^v{}_{ave}$, $v_{Cb}{}^w{}_{ave}$, $v_{Cc}{}^u{}_{ave}$, $v_{Cc}{}^v{}_{ave}$, and $v_{Cc}{}^w{}_{ave}$ that are voltage average values of the DC capacitors of the bridge cells in the clusters u-a, v-a, w-a, u-b, v-b, w-b, u-c, v-c, and w-c, respectively, are expressed by $v_{Cabc}{}^{uvw}{}_{ave}$ in FIG. 3. Values $v_{C\alpha}{}^\alpha{}_{ave}$, $V_{C\alpha}{}^\beta{}_{ave}$, $v_{C\beta}{}^\alpha{}_{ave}$, and $v_{C\beta}{}^\beta{}_{ave}$, values $v_{CO}{}^\alpha{}_{ave}$ and $v_{CO}{}^\beta{}_{ave}$, and values $v_{C\alpha}{}^O{}_{ave}$ and $v_{C\beta}{}^O{}_{ave}$ obtained by $\alpha\beta O$ transformation of these voltage average values of the DC capacitors are expressed by $v_{C\alpha\beta}{}^{\alpha\beta}{}_{ave}$, $v_{CO}{}^{\alpha\beta}{}_{ave}$, and $v_{C\alpha\beta}{}^O{}_{aVe}$ in FIG. 3, respectively.

Table 4

| $V_{Babc}{}^{uvwj*}$ | $V_{Ba}{}^{uj*}$, $V_{Ba}{}^{vj*}$, $V_{Ba}{}^{wj*}$, $V_{Bb}{}^{uj*}$, $V_{Bb}{}^{vj*}$, $V_{Bb}{}^{wj*}$, $V_{Bc}{}^{uj*}$, $V_{Bc}{}^{vj*}$, $V_{Bc}{}^{wj*}$ |
|---|---|
| $V_{abc}{}^{uvwj*}$ | $V_a{}^{uj*}$, $V_a{}^{vj*}$, $V_a{}^{wj*}$, $V_b{}^{uj*}$, $V_b{}^{vj*}$, $V_b{}^{wj*}$, $V_c{}^{uj*}$, $V_c{}^{vj*}$, $V_c{}^{wj*}$ |

As listed in Table 4, voltage command values $v_{Ba}{}^{uj*}$, $v_{Ba}{}^{vj*}$, $v_{Ba}{}^{wj*}$, $v_{Bb}{}^{uj*}$, $v_{Bb}{}^{vj*}$, $v_{Bb}{}^{wj*}$, $v_{Bc}{}^{uj*}$, $v_{Bc}{}^{vj*}$, and $v_{Bc}{}^{wj*}$ for controlling effective power input to the power converter 1 to equalize the DC capacitors in j-th (wherein, j = 1 to n) bridge cells in the clusters u-a, v-a, w-a, u-b, v-b, w-b, u-c, v-c, and w-c, respectively, are expressed by $v_{Babc}{}^{uvwj*}$ in FIG. 3. Further, voltage command values $v_a{}^{uj*}$, $v_a{}^{vj*}$, $v_a{}^{wj*}$, $v_b{}^{uj*}$, $v_b{}^{vj*}$, $v_b{}^{wj*}$, $v_c{}^{uj*}$, $v_c{}^{vj*}$, and $v_c{}^{wj*}$ of output voltages of the j-th (wherein, j = 1 to n) bridge cells in the clusters u-a, v-a, w-a, u-b, v-b, w-b, u-c, v-c, and w-c, respectively, are expressed by $v_{abc}{}^{uvwj*}$ in FIG. 3.

Block B1 of FIG. 3 calculates inner-cluster DC capacitor voltage average values $v_{Ca}{}^u{}_{ave}$, $v_{Ca}{}^v{}_{ave}$, $v_{Ca}{}^w{}_{ave}$, $v_{Cb}{}^u{}_{ave}$, $v_{Cb}{}^v{}_{ave}$, $v_{Cb}{}^w{}_{ave}$, $v_{Cc}{}^u{}_{ave}$, $v_{Cc}{}^v{}_{ave}$, and $v_{Cc}{}^w{}_{ave}$ that are voltage average values of the DC capacitors of the bridge cells in the clusters u-a, v-a, w-a, u-b, v-b, w-b, u-c, v-c, and w-c, respectively.

Block B2 calculates values $v_{C\alpha}{}^\alpha{}_{ave}$, $v_{C\alpha}{}^\beta{}_{ave}$, $v_{C\beta}{}^\alpha{}_{ave}$, $v_{C\beta}{}^\beta{}_{ave}$, $v_{CO}{}^\alpha{}_{ave}$, $v_{Co}{}^\beta{}_{ave}$, $v_{C\alpha}{}^O{}_{ave}$, $v_{C\beta}{}^O{}_{ave}$, and $v_{CO}{}^O{}_{ave}$ obtained by $\alpha\beta O$ transformation of the voltage average values of the DC capacitors calculated in block B1.

Block B3 multiplies $v_{CO}{}^O{}_{ave}$ by one-third.

Block B4 calculates currents $i_\alpha{}^\alpha$, $i_\alpha{}^\beta$, $i_\beta{}^\alpha$, and $i_\beta{}^\beta$ (i.e., circulating currents), currents $i_\alpha{}^O$ and $i_\beta{}^O$, and currents $i_0{}^\alpha$ and $i_0{}^\beta$ obtained by $\alpha\beta O$ transformation of cluster currents $i_a{}^u$, $i_a{}^v$, $i_a{}^w$, $i_b{}^u$, $i_b{}^v$, $i_b{}^w$, $i_c{}^u$, $i_c{}^v$, and $i_c{}^w$ flowing in the clusters u-a, v-a, w-a, u-b, v-b, w-b, u-c, v-c, and w-c, respectively.

Block B5 multiplies the currents $i_0{}^\alpha$ and $i_0{}^\beta$ by $\sqrt{3}$.

Block B6 controls current of the three-phase AC input side based on equation 12, controls a whole DC capacitor voltage average value to follow a predetermined DC capacitor voltage command value by inputting instantaneous effective power to the power converter 1 from the three-phase AC input side based on equation 15, and performs control for inputting instantaneous reactive power to the power converter 1 from the three-phase AC input side based on equation 16.

Block B7 (the inter-star converter balancing controller) and block B8 (the inner-star converter balancing controller) configure the DC capacitor voltage balancing controller 21.

Block B7 (the inter-star converter balancing controller) performs inter-star converter balancing control based on equation 26.

Block B8 (the inner-star converter balancing controller) performs inner-star converter balancing control based on equation 31.

Block B9 (the DC capacitor voltage fluctuation inhibiting controller 22) performs DC capacitor voltage fluctuation inhibiting control based on equation 40, equation 41, and equation 46. As described above, the DC capacitor voltage fluctuation inhibiting controller 22 appropriately performs switching to the non-inhibition control mode (equation 40), the inhibition control I mode (equation 41), or the inhibition control II mode (equation 46) according to a frequency of current of the three-phase AC output side of the power converter 1.

Block B10 (the circulating current controller 11) adds respective circulating current command values obtained in block B7 (the inter-star converter balancing controller), block B8 (the inner-star converter balancing controller), and block B9 (the DC capacitor voltage fluctuation inhibiting controller 22) and then controls circulating currents $i_\alpha{}^\alpha$, $i_\alpha{}^\beta$, $i_\beta{}^\alpha$, and $i_\beta{}^\beta$ to follow circulating current command values $i_\alpha{}^{\alpha*}$, $i_\alpha{}^{\beta*}$, $i_\beta{}^{\alpha*}$, and $i_\beta{}^{\beta*}$, respectively, based on equation 14.

Block B11 multiplies the currents $i_\alpha{}^O$ and $i_\beta{}^O$ by $\sqrt{3}$ to calculate currents $i_{M\alpha}$ and $i_{M\beta}$ of the three-phase AC output side.

Block B12 (the AC input/output current controller 12) controls current of the three-phase AC input side to follow an AC input current command value and controls current of the three-phase AC output side to follow an AC output current command value. When, for example, for use of the power converter 1 as a drive device of a three-phase motor, the three-phase motor is connected to the three-phase AC output side, it is possible that as an AC output current value, a command value for obtaining a desired motor rotational state is employed or motor current flowing in the three-phase motor is determined from cluster current and used for vector control of the three-phase motor.

Block B13 (the individual balancing controller) calculates voltage command values $v_{Ba}^{uj*}$, $v_{Ba}^{vj*}$, $v_{Ba}^{wj*}$, $v_{Bb}^{uj*}$, $v_{Bb}^{vj*}$, $v_{Bb}^{wj*}$, $v_{Bc}^{uj*}$, $v_{Bc}^{vj*}$, and $v_{Bc}^{wj*}$ for controlling effective power input to the power converter 1 to equalize the DC capacitors in j-th (wherein, j = 1 to n) bridge cells in the clusters u-a, v-a, w-a, u-b, v-b, w-b, u-c, v-c, and w-c, respectively, based on equation 39. Combined use of this balancing control and phase shift PWM control makes it possible to easily expand the number of stages by adding equation 39 according to the number of stages.

Block B14 applies $\alpha\beta O$ inverse transformation to voltage command values $v_\alpha^{\alpha*}$, $v_\alpha^{\beta*}$, $v_\beta^{\alpha*}$, $v_\beta^{\beta*}$, $v_O^{\alpha*}$, $v_\beta^{O*}$, $v_O^{\alpha*}$, $v_O^{\beta*}$, and $v_O^{O*}$ on the $\alpha\beta O$ coordinate axis obtained as described above and then calculates voltage command values $v_a^{u*}$, $v_a^{v*}$, $v_a^{w*}$, $v_b^{u*}$, $v_b^{v*}$, $v_b^{w*}$, $v_c^{u*}$, $v_c^{v*}$, and $v_c^{w*}$, respectively.

Since the number of bridge cells in one cluster is n (wherein, n is a positive integer), block B15 multiplies the voltage command values $v_a^{u*}$, $v_a^{v*}$, $v_a^{w*}$, $v_b^{u*}$, $v_b^{v*}$, $v_b^{w*}$, $v_c^{u*}$, $v_c^{v*}$, and $v_c^{w*}$ each obtained in block B14 by 1/n to calculate output voltage command values for the respective bridge cells in the same cluster.

Then, the output voltage command values of the respective bridge cells are added with the voltage command values $v_{Ba}^{uj*}$, $v_{Ba}^{vj*}$, $v_{Ba}^{wj*}$, $v_{Bb}^{uj*}$, $v_{Bb}^{vj*}$, $v_{Bb}^{wj*}$, $v_{Bc}^{uj*}$, $v_{Bc}^{vj*}$, and $v_{Bc}^{wj*}$ calculated in block B13, respectively, and then generates voltage command values $v_a^{uj*}$, $v_a^{vj*}$, $v_a^{wj*}$, $v_b^{uj*}$, $v_b^{vj*}$, $v_b^{wj*}$, $v_c^{uj*}$, $v_c^{vj*}$, and $v_c^{wj*}$, (expressed by $v_{abc}^{uvwj*}$ in FIG. 3) of output voltages of the j-th (wherein, j = 1 to n) bridge cells in the clusters u-a, v-a, w-a, u-b, v-b, w-b, u-c, v-c, and w-c, respectively. A switching controller (not illustrated) in the control apparatus 10 compares the generated voltage command values with triangle wave carrier signals (maximum value: 1, minimum value: -1) of a carrier frequency to generate PWM switching signals. The generated PWM switching signals are used for switching control of the semiconductor switching elements in the bridge cells in a corresponding cluster. It is possible to cause the triangle wave carrier signals used for the comparison with the voltage command values to have a phase difference by $\pi/n$ for each to employ phase shift PWM for realization of a multilevel AC output voltage.

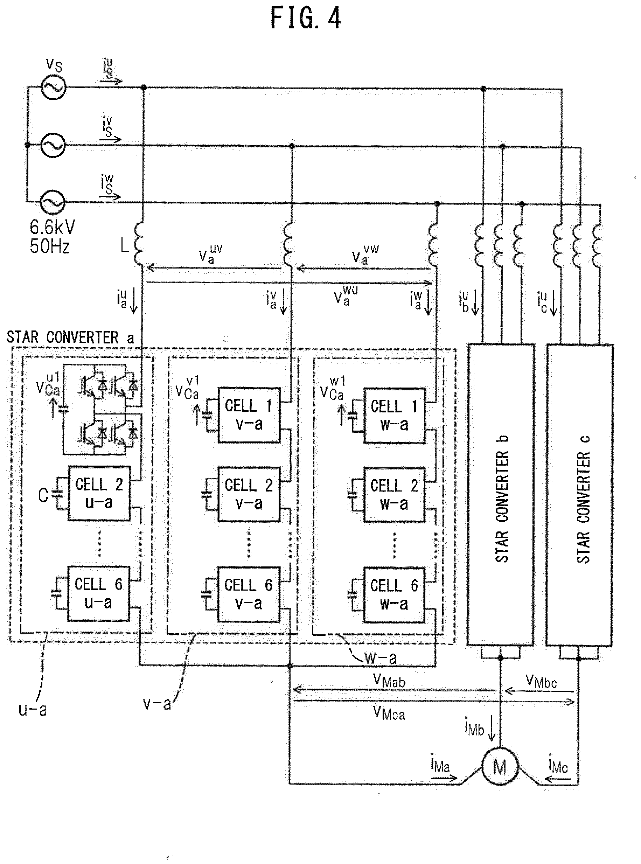

Next, a simulation result of the power converter 1 according to the present invention will be described. FIG. 4 is a diagram illustrating a main circuit configuration used for the simulation. While being basically the same as the main circuit described with reference to FIG. 1, in the simulation, the number of bridge cells in each cluster was 6. Further, in the simulation, the circuit parameters listed in Table 5 and the control gains listed in Table 6 were used. The motor load is assumed as a rated torque load where output power is proportional to motor frequency and the simulation is made using an RL load. The load inductance is fixed at 0.3 mH and the load power factor is about 1 in every case.

Table 5

| Circuit parameters | | |
|---|---|---|
| Rated active power | P | 10MW |
| Number of bridge cells | n | 6 |
| Line-to-line voltage effective value of power supply | $V_s$ | 6.6kV |
| Power supply frequency | $f_s$ | 50Hz |
| Motor rated line-to-line voltage effective value | $V_M$ | 6.6kV |
| Motor rated current effective value | $I_M$ | 870A |
| Reference frequency | $f_M$ B | 50Hz |
| Inductance | L | 1.1mH (8%) |
| Capacitance of DC capacitor of bridge cell | c | 4mF |
| DC capacitor voltage (command value) | $V_c$ | 1. 9kV |
| Unit capacitance constant | H | 39ms |
| Carrier frequency | $f_c$ | 1kHz |

Table 6

| Control Gains | | |
|---|---|---|
| Power Supply Current Feedback Gain | $K_S$ | 1.7V/A |
| Time Constant | $T_S$ | 20ms |
| Circulating Current Feedback Gain | $K_Z$ | 1V/A |

(continued)

| Control Gains | | |
|---|---|---|
| DC Capacitor Voltage Balancing Control Gain | $K_A$ | 3A/V |
| | $T_A$ | 1s |
| | $K_B$ | 0.5A/V |
| | $K_1$ | 0.3A/V |
| | $K_C$ | 0.01 1/A |

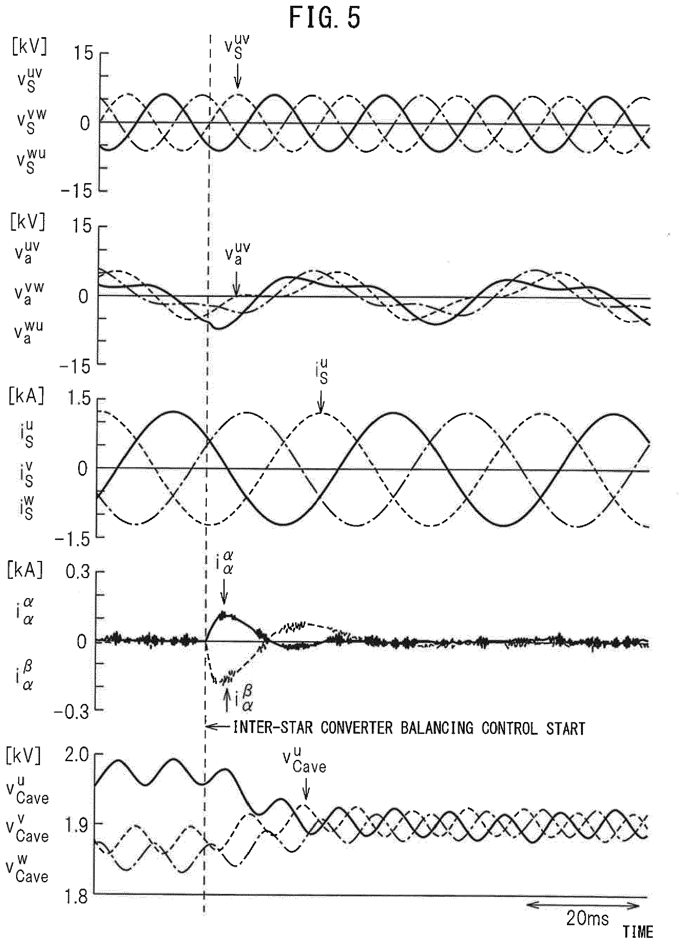

FIG. 5 is a chart illustrating a simulation result verifying an operation of the inter-star converter balancing controller. In the inter-star converter balancing controller, the simulation was applied to the case where the control term of the second term of the right side of equation 26 was shifted from an ineffective state to an effective state (i.e., an operation start). A motor frequency $f_M$ is 25 Hz and no DC capacitor fluctuation inhibiting control is applied. It is understood that in the ineffective state of inter-star converter balancing control, a deviation occurs among DC capacitor voltage average values $v_c{}^u{}_{ave}$, $v_c{}^v{}_{ave}$, and $v_c{}^w{}_{ave}$ of the star converters u, v, and w, respectively, but the deviation is inhibited upon an operation of inter-star converter balancing control. It is understood that at that time, in circulating currents $i_\alpha{}^\alpha$ and $i_\alpha{}^\beta$, a 25 Hz component that is the motor frequency flows and power is transferred among the star converters. Further, it is understood that since power supply current and motor current are not substantially changed even upon the operation of the inter-star converter balancing control, balancing control is realized without interfering with external current.

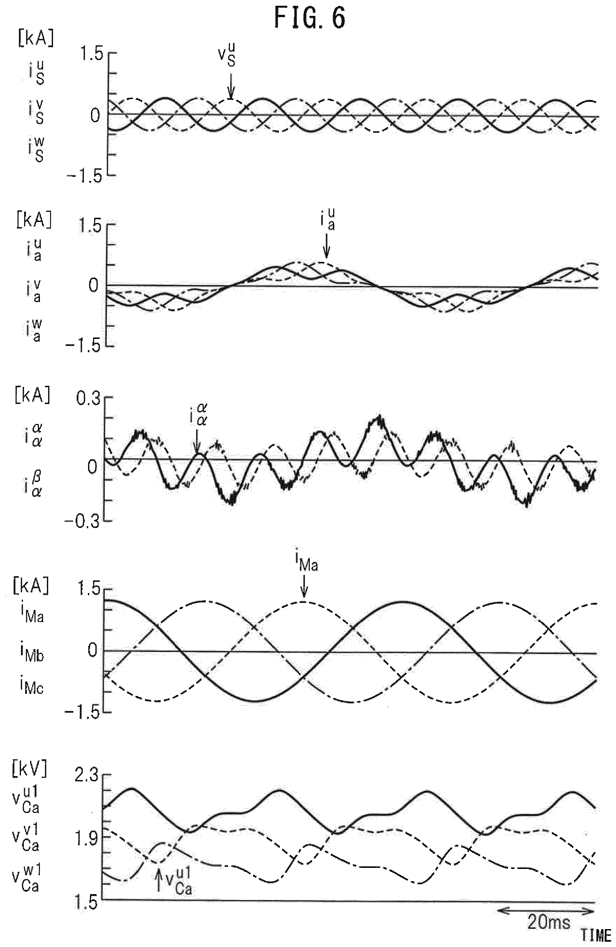

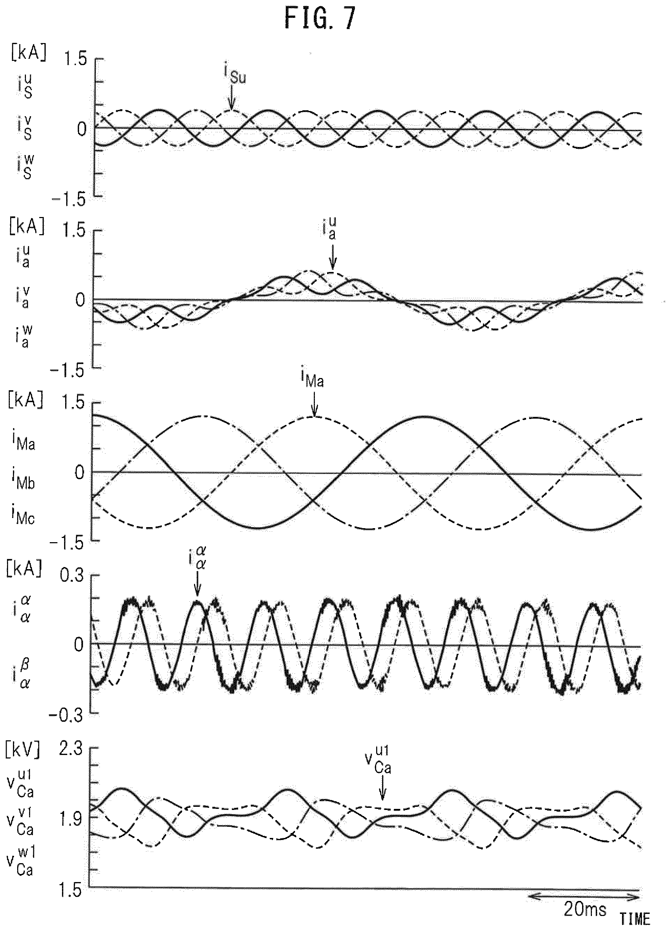

FIG. 6 is a chart illustrating a simulation result verifying an operation of the inhibition control I mode of DC capacitor voltage fluctuation inhibiting control. Further, FIG. 7 is a chart illustrating a simulation result verifying an operation of the inhibition control II mode of DC capacitor voltage fluctuation inhibiting control. In the simulation, the inhibition control I mode and the inhibition control II mode of DC capacitor voltage fluctuation inhibiting control were compared under a condition of $f_M$ = 50/3 Hz where the motor frequency was one-third of the power supply frequency. As illustrated in FIG. 6, in the inhibition control I mode, inter-star converter balancing control and inner-star converter balancing control avoid DC capacitor voltage dispersion but a voltage deviation among the DC capacitors is larger than in the case of the inhibition control II mode illustrated in FIG. 7. Therefore, from the viewpoint of the stability of DC capacitor voltage balancing control in a vicinity of $f_M = f_S/3$, it is understood that the inhibition control II mode of the DC capacitor voltage fluctuation inhibiting controller is effective.

Industrial Applicability

The present invention is applicable to a Modular Multilevel Cascade Converter based on Triple-Star Bridge-Cells (MMCC-TSBC) including clusters where the output sides of a plurality of single-phase full-bridge converters are cascaded, in which each three of the clusters are provided for one corresponding phase on a three-phase AC input side and each three of the clusters connected to respective phases different from each other on the three-phase AC input side are provided for the same phase on a three-phase AC output side. The present invention makes it possible to use a modular multilevel cascade converter, for example, in a motor drive device for an induction motor and a synchronous motor, a Static Synchronous Compensator (STATCOM), and a BTB (Back-To-Back) system such as a system interconnection apparatus, a frequency converter, and the like.

Reference Signs List

1 power converter
10 control apparatus
11 circulating current controller
12 AC input/output current controller
13 effective power controller
14 individual balancing controller
21 DC capacitor voltage balancing controller
22 DC capacitor voltage fluctuation inhibiting controller

**Claims**

1. A power converter (1) for three-phase AC, comprising AC input terminals, three AC input terminals being disposed for one corresponding phase (U, V, W) on a three-phase AC input side, reactors connected to the respective AC input terminals, further comprising AC output terminals, each one of the AC output terminals being disposed for one corresponding phase on a three-phase AC output side, and clusters (u-a, v-a, w-a, u-b, v-b, w-b, u-c, v-c, w-c) comprising single-phase full-bridge converters, wherein each single-phase full-bridge converter includes a DC capacitor, wherein the single-phase full-bridge converters of a cluster are connected in series between an input side of the cluster and an output side of the cluster, wherein the clusters form groups of three clusters, wherein each cluster of a group is connected via a reactor (L) to a different AC input terminal than the other two clusters of the group, and wherein the clusters of a group are connected to the same AC output terminal, wherein the power converter comprises:

   a circulating current controller (11)
   an AC input/output current controller (12) configured to control current on the three-phase AC input side to follow an AC input current command value and controlling current on the three-phase AC output side to follow an AC output current command value;
   **characterized in that** the power converter comprises:

   an effective power controller (13, B6) configured to control effective power flowing in the power converter from the three-phase AC input side so that a whole DC capacitor voltage average value obtained by averaging voltages of all the DC capacitors in the power converter follows a predetermined DC capacitor voltage command value; and
   a DC capacitor voltage balancing controller (21, B7, B8, B9) configured to generate a command value for the circulating current in order to control the circulating current circulating in the power converter so that each of inner-cluster DC capacitor voltage average values obtained by averaging voltage values of the DC capacitors of the respective clusters follows the whole DC capacitor voltage average value; and
   the circulating current controller (11, B10) configured to control the circulating current circulating in the power converter to follow the predetermined circulating current command value obtained by the DC capacitor voltage balancing controller (21, B7, B8, B9), such that control of the circulating current controller does not interfere with control of AC input/output current controller.

2. The power converter (1) according to Claim 1, wherein

   the DC capacitor voltage balancing controller (21) comprises
   an inter-star converter balancing controller configured to inhibit a deviation in the inner-cluster DC capacitor voltage average values generated among star converters each including the three clusters connected to the same phase, by power transfer among the star converters via control of a positive phase component of the circulating current; and
   an inner-star converter balancing controller configured to inhibit a deviation in the inner-cluster DC capacitor voltage average values generated among the clusters by power transfer among the clusters in the respective star converters via control of a reverse phase component of the circulating current.

3. The power converter (1) according to Claims 1 or 2 further comprising a DC capacitor voltage fluctuation inhibiting controller (22) configured to control the circulating current so as to cancel a frequency component being twice a frequency of current of the three-phase AC output side by temporally changing instantaneous effective power flowing in the star converter from the three-phase AC input side in harmony with instantaneous effective power flowing out to the three-phase AC output side from the star converter.

4. The power converter (1) according to any one of Claims 1 to 3 further comprising an individual balancing controller (14) configured to control each of voltages of the DC capacitors of the respective bridge cells to follow the inner-cluster DC capacitor voltage average value with respect to a cluster including the DC capacitors of the bridge cells.

**Patentansprüche**

1. Stromwandler (1) für einen dreiphasigen Wechselstrom, welcher AC-Eingangsanschlüsse aufweist, wobei drei AC-Eingangsanschlüsse für eine der entsprechenden Phasen (U, V, W) auf einer dreiphasigen AC-Eingangsseite angeordnet sind, wobei Drosseln mit den jeweiligen AC-Eingangsanschlüssen verbunden sind, wobei dieser ferner aufweist:

AC-Ausgangsanschlüsse, wobei jeder von den AC-Ausgangsanschlüssen für eine entsprechende Phase auf einer dreiphasigen AC-Ausgangsseite angeordnet ist, und wobei Gruppen (u-a, v-a, w-a, u-b, v-b, w-b, u-c, v-c, w-c) einphasige Vollbrückenwandler aufweisen, wobei jeder der einphasigen Vollbrückenwandler einen DC-Kondensator aufweist, wobei die einphasigen Vollbrückenwandler von einer Gruppe in Reihe zwischen einer Eingangsseite der Gruppe und einer Ausgangsseite der Gruppe geschaltet sind, wobei die Gruppen Anordnungen aus drei Gruppen bilden, wobei jede Gruppe von einer Anordnung über eine Drossel mit einem anderen AC-Eingangsanschluss als die anderen beiden Gruppen der Anordnung verbunden ist, wobei die Gruppe einer Anordnung mit demselben AC-Ausgangsanschluss verbunden ist, und wobei der Stromwandler aufweist:

eine Umlaufstromsteuerung (11);
eine AC-Eingangs-/Ausgangs-Stromsteuerung (12), die ausgestaltet ist, um den Strom auf der dreiphasigen AC-Eingangsseite zu steuern, um einem Steuerwert des AC-Eingangsstroms auf der dreiphasigen AC-Ausgangsseite zu folgen, und um einen Steuerstrom zu steuern, um einem Befehlswert des AC-Ausgangsstroms zu folgen; **dadurch gekennzeichnet, dass** der Stromwandler aufweist:

eine Wirkleistungssteuerung (13, B6), die ausgestaltet ist, um die Wirkleistung, die in den Stromwandler von der Dreiphasen-AC-Eingangsseite fließt, so zu steuern, dass der Mittelwert der gesamten DC-Kondensatorspannungen, der durch ein Mitteln der Spannungen aller DC-Kondensatoren in dem Stromwandler erhalten worden ist, einem vorbestimmten Befehlswert der DC-Kondensatorspannung folgt; und
eine DC-Kondensatorspannungsausgleichssteuerung (21, B7, B8, B9), die ausgestaltet ist, um einen Befehlswert für den umlaufenden Strom zu erzeugen, um den umlaufenden Strom, der in dem Stromwandler umläuft, so zu steuern, dass jeder der Mittelwerte der DC-Kondensatorspannungen der inneren Gruppe, der durch ein Mitteln der Spannungswerte der DC-Kondensatoren der jeweiligen Gruppe erhalten worden ist, dem Mittelwert der gesamten DC-Kondensatorspannungen folgt; und

wobei die Umlaufstromsteuerung (11, B10) ausgestaltet ist, um den umlaufenden Strom zu steuern, der in dem Stromwandler umläuft, um dem vorbestimmten Befehlswert des umlaufenden Stroms, der von der DC-Kondensatorspannungsausgleichssteuerung (21, B7, B8, B9) erhalten worden ist, so zu folgen, dass die Steuerung der Umlaufstromsteuerung die Steuerung der AC-Eingangs-/Ausgangs-Stromsteuerung nicht stört.

2.  Stromwandler (1) nach Anspruch 2, wobei die DC-Kondensatorspannungsausgleichssteuerung (21) aufweist:

eine Zwischen-Stern-Wandler-Ausgleichssteuerung, die ausgestaltet ist, um eine Abweichung der Mittelwerte der Gleichstromkondensatorspannungen in der inneren Gruppe zu verhindern, die zwischen Sternwandlern, von denen jeder die drei mit derselben Phase verbundenen Gruppe aufweist, durch eine Leistungsübertragung zwischen den Sternwandlern über die Steuerung einer Komponente einer positiven Phase des umlaufenden Stroms erzeugt wird; und
einen Inner-Stern-Wandler-Ausgleichssteuerung, die ausgestaltet ist, um eine Abweichung der Mittelwerte der Gleichstromkondensatorspannungen zwischen den Gruppen, die durch eine Leistungsübertragung zwischen den Gruppen in den jeweiligen Sternwandlern erzeugt werden, über eine Steuerung einer Komponente einer Umkehrphase des umlaufenden Stroms zu verhindern.

3.  Stromwandler (1) nach Anspruch 1 oder 2, welcher ferner eine DC-Kondensatorspannungsfehler-Verhinderungsschaltung (22) aufweist, die ausgestaltet ist, um den umlaufenden Strom so zu steuern, dass eine Komponente einer Frequenz, die das Doppelte einer Frequenz eines Stromes der dreiphasigen AC-Ausgangsseite beträgt, durch ein zeitliches Ändern der momentanen Wirkleistung, die in den Sternwandler von der Dreiphasen-Wechselstrom-Eingangsseite fließt, in Harmonie mit der momentanen Wirkleistung beseitigt wird, die aus der Dreiphasen-Wechselstrom-Ausgangsseite von dem Sternwandler fließt.

4.  Stromwandler (1) nach einem der Ansprüche 1 bis 3, welcher ferner eine individuelle Ausgleichssteuerung (14) aufweist, die ausgestaltet ist, um jeden von den DC-Kondensatoren der jeweiligen Brücke so zu steuern, dass er dem Mittelwert der DC-Kondensatorspannungen der inneren Gruppe in Bezug auf eine Gruppe folgt, welche die DC-Kondensatoren der Brückenzellen umfasst.

**Revendications**

1. Convertisseur de courant (1) pour AC triphasé, comprenant des bornes d'entrée d'AC, trois bornes d'entrée d'AC étant disposées pour une phase correspondante (U, V, W) sur le côté entrée d'AC triphasé, des réacteurs connectés aux bornes d'entrée d'AC respectives, comprenant en outre des bornes de sortie d'AC, chacune des bandes de sorties d'AC étant disposée pour une phase correspondante sur un côté sortie d'AC triphasé, et des ensembles (u-a, v-a, w-a, u-b, v-b, w-b, u-c, v-c, w-c) comprenant des convertisseurs à pont complet monophasés, chaque convertisseur à pont complet comprenant une capacité DC, les convertisseurs à pont complet monophasés de l'ensemble étant connectés en série entre un côté entrée de l'ensemble et un côté sortie de l'ensemble , les ensembles formant des groupes de trois ensembles, chaque ensemble d'un groupe étant connecté par l'intermédiaire d'un réacteur (L) à une borne d'entrée d'AC différente des deux autres ensembles du groupe, et les ensembles d'un groupe étant connectés à la même borne de sortie d'AC,
le convertisseur de courant comprenant :

   un contrôleur de courant circulant (11),
   un contrôleur de courant d'entrée/sortie AC (12) conçu pour contrôler le courant sur le côté entrée d'AC triphasé pour suivre une valeur de commande de courant d'entrée AC et contrôler le courant sur le côté sortie d'AC triphasé pour suivre une valeur de commande de courant de sortie d'AC ;
   **caractérisé en ce que** le convertisseur de courant comprend :

      un contrôleur de courant effectif (13, B6) conçu pour contrôler le courant effectif circulant dans le convertisseur de courant depuis le côté entrée d'AC triphasé de manière à ce qu'une valeur moyenne de tension de capacité DC totale obtenue en faisant la moyenne des tensions de la totalité des capacités DC dans le contrôleur de courant suive une valeur prédéterminée de commande de tension de capacité DC ; et
      un contrôleur d'équilibrage de tension de capacité DC (21, B7, B8, B9) conçu pour générer une valeur de commande pour le courant circulant afin de de contrôler le courant circulant en train de circuler dans le convertisseur de courant de manière à ce que chacune des valeurs moyennes de tension de capacité DC d'ensemble interne obtenues en faisant la moyenne des valeurs de tension des capacités DC des ensembles respectifs suive la valeur moyenne de tension de capacité DC, et
      le contrôleur de courant circulant (11, B10) conçu pour contrôler le courant circulant en train de circuler dans le convertisseur de courant pour suivre la valeur déterminée de commande de courant circulant obtenue par le contrôleur d'équilibrage de tension de capacité DC (21, B7, B8, B9) de manière à ce que le contrôle du contrôleur de courant circulant n'interfère pas avec le contrôle du contrôleur de courant d'entrée/sortie d'AC.

2. Convertisseur de courant (1) selon la revendication 1, dans lequel le contrôleur d'équilibrage de tension de capacité DC (21) comprend
un contrôleur d'équilibrage de convertisseur inter-étoiles conçu pour inhiber une déviation dans les valeurs moyennes de tension de capacité DC d'ensemble interne générées parmi des convertisseurs en étoile incluant chacun des trois ensembles connectés à la même phase, par transfert de courant parmi les convertisseurs en étoile via le contrôle d'un composant de phase positif du courant circulant ; et
un contrôleur d'équilibrage de convertisseurs à étoile interne conçu pour inhiber une déviation des valeurs moyennes de tension de capacité DC d'ensemble interne générées parmi les ensembles par transfert de courant parmi les ensembles dans les convertisseurs en étoile respectifs via le contrôle d'un composant de phase du courant circulant.

3. Convertisseur de courant (1) selon la revendication 1 ou 2, comprenant en outre un contrôleur inhibant la fluctuation de tension de capacité DC (22) conçu pour contrôler le courant circulant de manière à annuler un composant de fréquence qui représente deux fois la fréquence de courant du côté sortie d'AC triphasé en changeant temporairement le courant effectif instantané circulant dans le convertisseur en étoile depuis le côté entrée d'AC triphasé en harmonie avec le courant effectif instantané s'écoulant vers le côté sortie d'AC triphasé depuis le convertisseur en étoile.

4. Convertisseur de courant (1) selon l'une quelconque des revendications 1 à 3, comprenant en outre un contrôleur d'équilibrage individuel (14) conçu pour contrôler chacune des tensions des capacités DC des cellules à pont respectif pour suivre la valeur moyenne de tension de capacité DC d'ensemble interne par rapport à un ensemble incluant les capacités DC des cellules à pont.

# FIG. 1

EP 2 887 524 B1

FIG. 2

FREQUENCY OF THREE-PHASE AC OUTPUT SIDE(Hz)

# FIG. 3

FIG. 4

# FIG. 5

INTER-STAR CONVERTER BALANCING CONTROL START

36

# FIG. 6

FIG. 7

38

FIG. 8

n BRIDGE CELLS

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012099176 A1

**Non-patent literature cited in the description**

- **S. ANGKITITRAKUL ; R. W. ERICKSON.** Capacitor voltage balancing control for a modular matrix converter. *IEEE. Rec, IEEE-APEC,* 2006
- **F. KAMMERER ; M. BRAUN.** A novel cascaded vector control scheme for the modular multilevel matrix converter. *IEEE. Rec, IEEE-IECON,* 2011, 1097-1102
- **A. J. KORN ; M. WINKELNKEMPER ; J. W. KOLAR.** Direct Modular Multi-Level Converter for Gearless Low-Speed Drives. *IEEE. Rec, IEEE-EPE,* 2011
- **WATARU KAWAMURA ; MAKOTO HAGIWARA ; HIROFUMI AKAGI.** Classification and Terminology of the Modular Multilevel Cascade Converter (MMCC-TSBC). *IEEJ Annual Meeting,* March 2012